# EUROPÄISCHE PATENTSCHRIFT

(11) **EP 3 611 086 B1**
(45) Veröffentlichungstag und Bekanntmachung des Hinweises auf die Patenterteilung: **14.02.2024**
(21) Anmeldenummer: 19200544.5
(22) Anmeldetag: 22.11.2016
(51) Int. Cl.: B62L 1/00, B60T 8/32, B60T 8/176, B62M 6/45, B62L 3/02, B60T 8/17, G01P 3/488, B62J 45/413

(54) **RADEINHEIT MIT EINER BREMSSCHEIBE UND EINEM SENSORKRANZ**
WHEEL UNIT WITH DISK BRAKE AND A SENSOR RING
UNITÉ DE ROUE AVEC UN FREIN À DISQUE ET UNE BAGUE CAPTEUR

(30) Priorität: 27.11.2015 DE 102015120656
(43) Veröffentlichungstag der Anmeldung: 19.02.2020
(62) Teilanmeldung aus: 16200038.4
(73) Patentinhaber: Gustav Magenwirth GmbH & Co. KG, 72574 Bad Urach (DE)
(72) Erfinder: Neutsch, Christian, 72764 Reutlingen (DE)
(74) Vertreter: Hoeger, Stellrecht & Partner Patentanwälte mbB

(56) Entgegenhaltungen:
- WO-A1-2011/016324
- DE-A1-102008 019 469
- DE-A1-102014 005 527
- DE-T2-602005 003 495
- TW-A- 201 117 986
- US-A1- 2006 066 294
- US-A1- 2008 111 342
- US-B1- 6 492 805

## Beschreibung

Die Erfindung betrifft ein Fahrrad umfassend eine vordere Radeinheit und eine hintere Radeinheit, wobei die Radeinheiten durch einen Rahmen miteinander verbunden sind und jede der Radeinheiten eine Nabe und eine Felge, welche um eine Drehachse drehbar beweglich angeordnet ist, umfasst, wobei die Nabe und die Felge durch Speichen miteinander verbunden sind.

Derartige Fahrräder sind aus dem Stand der Technik bekannt. Das Dokument DE102014005527A1 zum Beispiel offenbart alle Merkmale des Oberbegriffs des Anspruchs 1.

Der Erfindung liegt die Aufgabe zugrunde, ein Fahrrad zu verbessern. Diese Aufgabe wird durch ein Fahrrad mit der Merkmalskombination des Anspruchs 1 gelöst.

Vorteilhafte Weiterentwicklungen sind in den abhängigen Ansprüchen definiert. Beispielsweise ist ein Vorteil davon, dass die Bremszange eine Einfassung umfasst, in welcher der Sensor angeordnet ist, so dass somit der Sensor an einer vor äußeren Einflüssen geschützten Stelle angeordnet ist und durch die Anordnung des Sensors innerhalb der Bremszange kein zusätzlicher Bauraum benötigt wird.

Im Zusammenhang mit dieser Offenbarung ist unter einem Fahrrad ein Fahrzeug zu verstehen, welches nur durch die Muskelkraft eines Fahrers angetrieben wird, oder durch die Muskelkraft des Fahrers angetrieben werden kann und einen Zusatzantrieb umfasst, der insbesondere abgasfrei, beispielsweise ohne COz-Ausstoß arbeitet, wobei der Zusatzantrieb insbesondere den Antrieb durch die menschliche Muskelkraft ergänzt und/oder, beispielsweise phasenweise, insbesondere bei für den Fahrer anstrengenden Fahrabschnitten, ersetzt.

Der Zusatzantrieb umfasst insbesondere einen elektrischen Antriebsmotor, der vorzugsweise aus einem Stromspeicher oder aus einer Brennstoffzelle mit elektrischer Energie gespeist wird.

Beispielsweise benötigt der Zusatzantrieb und somit insbesondere auch das Fahrrad zum Antrieb keine fossilen Brennstoffe.

Somit umfasst der Begriff Fahrrad im hier verwendeten Sinne insbesondere Fahrräder, die nur durch die Muskelkraft des Fahrers antreibbar sind, sowie Fahrräder, welche beispielsweise durch die Muskelkraft des Fahrers antreibbar sind, mit einem dauernd wirkenden oder zuschaltbaren Zusatzantrieb, beispielsweise E-Bikes und Pedelecs, also elektrisch angetriebene Fahrräder.

Insbesondere erreichen derartige Fahrräder Höchstgeschwindigkeiten von höchstens 100 km/h, beispielsweise von höchstens 80 km/h, insbesondere von höchstens 60 km/h, insbesondere von höchstens 40 km/h.

Damit ist das Fahrrad und somit insbesondere auch die Radeinheit für das Fahrrad in Leichtbauweise für eine derartige Höchstgeschwindigkeit ausgelegt.

Außerdem sind Fahrräder im hier verwendeten Sinne leichte Fahrzeuge mit einem Gewicht beispielsweise von höchstens 100 kg, insbesondere von höchstens 80 kg, in besonders zweckmäßiger Weise von höchstens 50 kg, insbesondere von höchstens 30 kg, so dass die Radeinheit das Fahrrad für eine Belastung mit einem derartigen Höchstgewicht plus dem Gewicht des Fahrers ausgelegt ist.

Bei vorteilhaften Radeinheiten ist vorgesehen, dass an der Nabe eine Bremsscheibe und ein Sensorkranz mit einem Abtastbereich angeordnet sind und dass der Sensorkranz an der Bremsscheibe anliegend angeordnet ist. Einer der Vorteile der erfindungsgemäßen Lösung ist darin zu sehen, dass mit dem Sensorkranz die Radeinheit für einen Sensor detektierbar ist und somit die Radeinheit derart ausgebildet ist, dass für den Sensor Rolleigenschaften der Radeinheit, beispielsweise eine Drehgeschwindigkeit eines Rades der Radeinheit, ermittelbar sind.

Da der Sensorkranz an der Bremsscheibe anliegend angeordnet ist, ist ein geringer Bauraum für die beiden Elemente notwendig, so dass der Sensorkranz zusätzlich zu der Bremsscheibe an der Nabe montierbar ist, obwohl bei den gattungsgemäßen Radeinheiten für Fahrräder wenig freier Bauraum vorhanden ist.

Ein weiterer Vorteil der erfindungsgemäßen Lösung ist darin zu sehen, dass die Bremsscheibe durch die erfindungsgemäße Anordnung der Bremsscheibe und des Sensorkranzes gemäß den üblichen Standardisierungen, beispielsweise bezüglich der Anordnung der Bremsscheibe in einer zu der Drehachse axialen Richtung, montierbar ist.

Dabei sind verschiedene anliegende Anordnungen des Sensorkranzes an die Bremsscheibe denkbar.

Bei einer vorteilhaften Ausführungsform ist vorgesehen, dass sich der Sensorkranz an der Bremsscheibe abstützt und dadurch zum einen die beiden Elemente eng anliegend montiert sind, so dass nur ein äußerst kleiner Bauraum erforderlich ist und zum anderen wird dadurch eine stabile Anordnung der Elemente ermöglicht.

Bei einer weiteren besonders günstigen Ausführungsform ist vorgesehen, dass der Sensorkranz unmittelbar an der Bremsscheibe anliegt, und somit kein weiterer Bauraum zwischen den beiden Elementen benötigt wird.

Bei einer weiteren besonders vorteilhaften Ausführungsform ist zwischen dem Sensorkranz und der Bremsscheibe eine Zwischenlage angeordnet.

Beispielsweise reduziert die Zwischenlage die Geräuschentwicklung der Bremsscheibe und des Sensorkranzes und/oder schützt die Bauteile vor Korrosion.

Beispielsweise ist die Zwischenlage zumindest teilweise als Kunststofflage ausgebildet.

Insbesondere ist die Zwischenlage im Wesentlichen eine Klebefolie.

Bei einer weiteren vorteilhaften Ausführungsform ist vorgesehen, dass die Zwischenlage eine Lackschicht umfasst.

In vorteilhafter Weise umfasst die Zwischenlage ein Dichtpapier.

Bei einer besonders vorteilhaften Ausführungsform ist vorgesehen, dass die Zwischenlage eine Dicke bezogen auf die zu der Drehachse axialen Richtung aufweist, die kleiner ist als 1,5 mm, beispielsweise kleiner ist als 1,2 mm, insbesondere kleiner ist als 1 mm, in besonders bevorzugter Weise kleiner ist als 0,8 mm.

Hinsichtlich der Ausgestaltung der Bremsscheibe wurden bislang keine weiteren Angaben gemacht.

Beispielsweise ist die Bremsscheibe pulverbeschichtet, wodurch diese vor äußeren Einwirkungen geschützt ist und eine längere Einsatzdauer ermöglicht wird.

Ebenso ist es denkbar, dass die Bremsscheibe beispielsweise lackiert ist.

Bei einer besonders bevorzugten Ausführungsform ist vorgesehen, dass die Dicke der Bremsscheibe, bezogen auf eine Erstreckung in eine zu der Drehachse axialen Richtung, beispielsweise größer als 1 mm, insbesondere größer als 1,5 mm, in besonders bevorzugter Weise größer als 1,8 mm ist und beispielsweise ist vorgesehen, dass die Dicke der Bremsscheibe, bezogen auf die Erstreckung in die zu der Drehachse axialen Richtung kleiner ist als 4 mm, insbesondere kleiner ist als 3,7 mm, in besonders bevorzugter Weise kleiner ist als 3,3 mm.

In günstiger Weise ist vorgesehen, dass die Bremsscheibe mehrere Tragestege umfasst, die einen Bremsring tragen.

Beispielsweise sind mindestens drei, besonders bevorzugt mindestens fünf Tragestege vorgesehen und insbesondere sind höchstens 20, insbesondere höchstens 15 Tragestege vorgesehen und in einer besonders vorteilhaften Ausführungsform sind sieben Tragestege vorgesehen.

Beispielsweise sind die Tragestege leicht schräg zur der Drehachse radialen Richtung der Bremsscheibe ausgerichtet, insbesondere sind die Tragestege bogenförmig ausgebildet, wodurch die Stabilität der Bremsscheibe erhöht wird und die Tragestege unterschiedlich starke Expansionen einzelner Teilbereiche der Bremsscheibe aufgrund von Temperaturunterschieden in den Teilbereichen und/oder Materialunterschieden ausgleichen können.

Beispielsweise verbinden die Tragestege den Bremsring mit einem Montagering der Bremsscheibe, wobei mit dem Montagering die Bremsscheibe an die Nabe montierbar ist.

Durch die Tragestege sind der Bremsring und der Montagering stabil miteinander verbunden, wobei jedoch mit den mehreren Tragestegen eine gewisse Flexibilität erreicht wird, um eine Ausdehnung des Bremsrings aufgrund einer bremsenden Einwirkung und der daraus resultierenden Temperaturerhöhung in dem Bremsring auszugleichen.

Insbesondere sind die Tragestege in eine die Drehachse umlaufende Umlaufrichtung periodisch angeordnet.

Bei einer besonders vorteilhaften Ausführungsform ist vorgesehen, dass N Tragestege an der Bremsscheibe angeordnet sind und die Anordnung der Tragestege bezüglich einer Drehung um eine Bremsscheibenachse mit einem Winkel 360°/N drehsymmetrisch ist, wobei N die Anzahl der Tragestege ist.

Damit sind die Tragestege symmetrisch um die Drehachse angeordnet und beeinträchtigen die Rolleigenschaften der Radeinheit, insbesondere des Rades, nicht.

Hinsichtlich der Ausgestaltung des Sensorkranzes wurden bislang keine näheren Angaben gemacht.

In vorteilhafter Weise ist vorgesehen, dass sich der Sensorkranz im Wesentlichen in einer Sensorkranzebene, welche senkrecht zu einer Sensorkranzachse verläuft, erstreckt.

Beispielsweise ist vorgesehen, dass der Sensorkranz eine Dicke in einer zu der Sensorkranzachse axialen Richtung aufweist, die beispielsweise kleiner als 2 mm, insbesondere kleiner als 1,5 mm, in besonders günstiger Weise kleiner als 1,2 mm ist.

Grundsätzlich ist es denkbar, dass der Sensorkranz in einem unverbauten Zustand scheibenartig ausgebildet ist, insbesondere planar ist.

Bei einer besonders günstigen Ausführungsform ist vorgesehen, dass der Sensorkranz in dem unverbauten Zustand tellerförmig ist, wobei unter einem tellerförmigen Sensorkranz insbesondere zu verstehen ist, dass der Sensorkranz in einer zu der Sensorkranzachse radialen Richtung leicht gebogen ist.

Bei einer besonders vorteilhaften Ausführungsform ist vorgesehen, dass in dem unverbauten Zustand ein Innenbereich des Sensorkranzes von der Sensorkranzebene, welche dabei durch einen Außenbereich des Sensorkranzes definiert wird, beabstandet ist.

Besonders günstig ist es, wenn der Sensorkranz mit einer Vorspannung an die Nabe und damit anliegend an die Bremsscheibe montiert wird.

Bei einer besonders günstigen Ausführungsform ist vorgesehen, dass der Außenbereich des Sensorkranzes kraftbeaufschlagt an der Bremsscheibe anliegend angeordnet ist, wodurch der Sensorkranz in besonders günstiger Weise an der Bremsscheibe anliegt, insbesondere sich abstützt und die Anordnung eine besonders vorteilhafte Stabilität erreicht.

Hinsichtlich der Ausgestaltung des Abtastbereiches wurden bislang keine näheren Angaben gemacht.

Besonders günstig ist es, wenn der Abtastbereich an den Tragestegen anliegend angeordnet ist.

Bei einer vorteilhaften Ausführungsform ist vorgesehen, dass der Abtastbereich sich an den Tragestegen der Bremsscheibe abstützt.

In besonders vorteilhafter Weise ist vorgesehen, dass der Abtastbereich eine entlang der Umlaufrichtung um die Sensorkranzachse periodisch variierende Struktur aufweist und somit ein Sensor bei einem rotierenden Abtastbereich ein zeitlich periodisches Signal in Abhängigkeit von der Drehgeschwindigkeit erhält.

Besonders vorteilhaft ist es, wenn die periodisch variierende Struktur in dem Abtastbereich bezüglich einer Drehung um die Sensorkranzachse mit einem Winkel 360°/kN drehsymmetrisch ist, wobei kN der Anzahl N der Tragestege der Bremsscheibe oder einem ganzzahligen Vielfachen davon entspricht, wobei also k eine natürliche Zahl ist.

Beispielsweise ist k größer als 4, insbesondere größer als 6, und insbesondere ist k kleiner als 20, insbesondere kleiner als 15.

Dabei kann die periodisch variierende Struktur in unterschiedlicher Weise ausgebildet sein.

Beispielsweise umfasst der Sensorkranz in unterschiedlichen Teilbereichen in dem Abtastbereich unterschiedliche Materialien, so dass die periodisch variierende Struktur durch eine entlang der Umlaufrichtung periodisch variierende Materialzusammensetzung des Sensorkranzes ausgebildet ist.

Beispielsweise ist es auch denkbar, dass die periodisch variierende Struktur durch eine periodisch variierende Materialdichte ausgebildet ist.

Beispielsweise variiert eine optische und/oder eine elektronische und/oder eine magnetische Materialeigenschaft eines den Sensorkranz im Abtastbereich bildenden Materials entlang der Umlaufrichtung um die Drehachse periodisch, so dass die periodisch variierende Struktur beispielsweise durch eine periodisch variierende Materialzusammensetzung oder die periodisch variierenden Materialeigenschaften ausgebildet ist.

Beispielsweise weist der Sensorkranz in dem Abtastbereich eine entlang der Umlaufrichtung um die Drehachse periodisch variierende Oberflächenstruktur, beispielsweise ausgebildet durch Erhebungen und/oder Vertiefungen, insbesondere ausgebildet durch eine Oberflächenbeschichtung, auf und diese periodisch variierende Oberflächenstruktur bildet die periodisch variierende Struktur in dem Abtastbereich.

Bei einer besonders vorteilhaften Ausführungsform ist vorgesehen, dass die periodisch variierende Struktur entlang der Umlaufrichtung um die Sensorkranzachse periodisch variierend unterschiedlich stark magnetfeldbeeinflussend ausgebildet ist, wobei beispielsweise der Sensorkranz in dem Abtastbereich ein den Abtastbereich durchdringendes Magnetfeld hinsichtlich dessen Stärke und/oder Ausrichtung beeinflusst.

Ein Vorteil der periodisch variierend unterschiedlich stark magnetfeldbeeinflussenden Struktur ist es, dass kleinere Verunreinigungen, beispielsweise Dreck, die bei einem Einsatz der Radeinheit häufig auftreten und welche höchstens schwach magnetfeldbeeinflussend ausgebildet sind, die periodisch variierend unterschiedlich stark magnetfeldbeeinflussende Wirkung der periodisch variierenden Struktur höchstens schwach beeinflussen.

Dabei ist es grundsätzlich denkbar, dass beispielsweise der Abtastbereich aus unterschiedlich magnetisierten Teilbereichen aufgebaut ist und ebenso ist es denkbar, dass insbesondere der Sensorkranz in dem Abtastbereich in unterschiedlichen Teilbereichen unterschiedliche magnetfeldbeeinflussende Materialien umfasst.

Beispielsweise ist die periodisch variierende Struktur als gezahnte Struktur ausgebildet.

Bei einer besonders günstigen Ausführungsform ist vorgesehen, dass die periodisch variierende Struktur durch regelmäßig abwechselnd angeordnete Durchbrüche und Materialbrücken ausgebildet ist, wodurch in konstruktiv einfacher Weise eine periodisch variierende Struktur, insbesondere eine gezahnte Struktur bereitgestellt wird.

Damit ist beispielsweise die periodische Anordnung von Durchbrüchen und Materialbrücken auch unterschiedlich stark magnetfeldbeeinflussend, da die Durchbrüche ein Magnetfeld, welches diese Durchbrüche durchdringt, anders beeinflussen, als ein Bereich des Abtastbereiches, in welchem eine der Materialbrücken angeordnet ist.

Dabei ist in besonders vorteilhafter Weise vorgesehen, dass sich die Durchbrüche länglich in der zu der Sensorkranzachse radialen Richtung erstrecken.

Grundsätzlich ist es denkbar, dass eine ungerade Anzahl an Durchbrüchen vorgesehen ist, es ist aber auch denkbar, dass eine gerade Anzahl an Durchbrüchen vorgesehen ist.

Bei einer besonders vorteilhaften Ausführungsform ist vorgesehen, dass in dem Abtastbereich mN Durchbrüche und mN Materialbrücken angeordnet sind, wobei mN der Anzahl N der Tragestege der Bremsscheibe oder einem ganzzahligen Vielfachen davon entspricht, dass also m eine natürliche Zahl ist.

Insbesondere ist es vorteilhaft, wenn mindestens 20, in günstiger Weise mindestens 30, besonders bevorzugt mindestens 40, insbesondere mindestens 50 Durchbrüche in dem Abtastbereich vorgesehen sind.

Besonders bevorzugt sind weniger als 200, insbesondere weniger als 180, in besonders günstiger Weise weniger als 150, insbesondere weniger als 120 Durchbrüche in dem Abtastbereich vorgesehen.

Besonders günstig ist es, wenn die Durchbrüche und die Materialbrücken bezüglich einer Drehung um die Sensorkranzachse mit einem Winkel 360°/IN drehsymmetrisch angeordnet sind, wobei IN der Anzahl N der Tragestege der Bremsscheibe oder einem ganzzahligen Vielfachen davon entspricht, dass also I eine natürliche Zahl ist.

Dabei ist insbesondere vorgesehen, dass der Winkel 360°/IN, bezüglich welchem die Anordnung der Durchbrüche und der Materialbrücken drehsymmetrisch zur Sensorkranzachse ist, gleich groß ist wie der Winkel 360°/kN, bezüglich welchem die periodisch variierende Struktur zur Sensorkranzachse drehsymmetrisch ist.

Sind die Materialbrücken gleich ausgebildet und die Durchbrüche gleich ausgebildet, so ist insbesondere die Anzahl mN der Materialbrücken und der Teiler IN in dem Winkel 360°/IN, bezüglich welchem die Anordnung der Materialbrücken und der Durchbrüche zu der Sensorkranzachse drehsymmetrisch ist, gleich groß, jedoch ist es auch denkbar, dass IN und mN unterschiedlich groß sind.

Bei einer besonders vorteilhaften Ausführungsform ist vorgesehen, dass die Durchbrüche und die Materialbrücken zwischen den Tragestegen der Bremsscheibe entlang der Umlaufrichtung um die Drehachse periodisch angeordnet sind, so dass die gemeinsame Anordnung von Durchbrüchen, Materialbrücken und den Tragestegen eine entlang der Umlaufrichtung um die Drehachse periodisch verlaufende Struktur ausbilden.

Besonders günstig ist es, wenn die Durchbrüche geneigt zu der zu der Sensorkranzachse radialen Richtung verlaufen, insbesondere in einer analogen Weise wie die Tragestege der Bremsscheibe zur der zu der Sensorkranzachse radialen Richtung ausgerichtet sind.

Bei einer besonders vorteilhaften Ausführungsform ist vorgesehen, dass eine Breite der Durchbrüche quer zu der zu der Sensorkranzachse radialen Richtung kleiner ist als eine Breite der Tragestege der Bremsscheibe quer zu der zu der Bremsscheibenachse radialen Richtung, so dass die Tragestege der Bremsscheibe jeweils mindestens einen Durchbruch des Sensorkranzes abdecken können.

In besonders vorteilhafter Weise ist vorgesehen, dass ein jeder Rand eines jeden der Tragestege an einem ein Magnetfeld stark beeinflussenden Bereich des Abtastbereiches, insbesondere in einer Montageposition der Bremsscheibe und des Sensorkranzes an der Nabe, angeordnet ist, wodurch ein Rand eines der Tragestege die unterschiedlich stark magnetfeldbeeinflussende Struktur des Abtastbereiches nicht oder in unerheblicher Weise beeinträchtigt.

Bei einer besonders vorteilhaften Ausführungsform wird ein Rand eines jeden der Tragestege von einer der Materialbrücken im Abtastbereich abgedeckt, wodurch die periodisch variierende Struktur im Abtastbereich durch die Anordnung der Bremsscheibe nicht oder höchstens in unerheblicher Weise beeinträchtigt wird.

Insbesondere ist vorgesehen, dass die Tragestege der Bremsscheibe periodisch entlang der Umlaufrichtung um die Drehachse zu der periodisch variierenden Struktur des Abtastbereiches angeordnet sind, so dass insbesondere in der Montageposition der Bremsscheibe und des Sensorkreises an der Nabe, in dem Abtastbereich die Tragestege der Bremsscheibe und die periodisch variierende Struktur des Abtastbereiches eine gemeinsam periodisch variierende Struktur ausbilden.

In vorteilhafter Weise ist vorgesehen, dass jeder der Tragestege mindestens einen der Durchbrüche vollständig abdeckt.

Beispielsweise ist vorgesehen, dass zumindest einige, insbesondere jeder, der Tragestege genau einen der Durchbrüche vollständig abdeckt.

Ebenso ist es denkbar, dass zumindest einige, insbesondere jeder der Tragestege beispielsweise zwei Durchbrüche, insbesondere drei Durchbrüche vollständig abdeckt.

Bei einer weiteren vorteilhaften Ausführungsform ist vorgesehen, dass die Tragestege unterschiedlich viele Durchbrüche abdecken, wobei die Anzahl der unterschiedlich vielen abgedeckten Durchbrüche entlang der Umlaufrichtung um die Drehachse periodisch ist.

Bei einer besonders günstigen Ausführungsform ist vorgesehen, dass jeder der Durchbrüche entweder vollständig von einem Tragesteg abgedeckt ist oder freiliegend ist, wodurch erreicht wird, dass der Sensor bei den Durchbrüchen nur zwei unterschiedliche aber eindeutig definierte Signale erhält, nämlich entweder das Signal eines vollständig abgedeckten Durchbruches oder das Signal eines freiliegenden Durchbruches und somit die magnetfeldbeeinflussende Wirkung eines der Durchbrüche nicht durch einen Rand eines der Tragestege beeinflusst wird.

Besonders bevorzugt ist es, wenn die abgedeckten Durchbrüche und die freiliegenden Durchbrüche entlang der Umlaufrichtung um die Sensorkranzachse in periodischer Weise angeordnet sind, so dass auch in der Montageposition der Abtastbereich eine entlang der Umlaufrichtung um die Sensorkranzachse periodisch variierende Struktur aufweist.

Beispielsweise ist vorgesehen, dass auf einen abgedeckten Durchbruch eine bestimmte Anzahl an freiliegenden Durchbrüchen folgt, beispielsweise mindestens drei, insbesondere mindestens fünf, beispielsweise höchstens zwölf freiliegende Durchbrüche folgen.

Dabei ist es auch denkbar, dass an zwei benachbarten abgedeckten Durchbrüchen eine bestimmte Anzahl an freiliegenden Durchbrüchen angeordnet ist, beispielsweise mindestens drei, insbesondere mindestens fünf, beispielsweise höchstens zwölf freiliegende Durchbrüche angeordnet sind.

Bei einer besonders günstigen Ausführungsform ist vorgesehen, dass Haltestege des Sensorkranzes den Abtastbereich an einem Montagering des Sensorkranzes halten, so dass der Abtastbereich stabil an dem Montagering gehalten wird und durch die Ausbildung der Haltestege eine gewisse Flexibilität erreicht ist.

Dabei ist der Montagering des Sensorkranzes insbesondere an der Nabe montierbar.

Bei einer besonders bevorzugten Ausführungsform ist vorgesehen, dass der Sensorkranz und die Bremsscheibe derart an der Nabe angeordnet sind, dass die Tragestege der Bremsscheibe und die Haltestege des Sensorkranzes sich in der zu der Drehachse axialen Richtung abdecken.

Dabei ist unter sich abdeckenden Haltestegen und Tragestegen insbesondere zu verstehen, dass die Haltestege und Tragestege in analoger Weise ausgebildet sind und die Haltestege und Tragestege deckungsgleich aneinander liegend angeordnet sind.

Es ist auch denkbar, dass die Haltestege und die Tragestege in unterschiedlicher Weise aber ähnlich ausgebildet sind, dann ist unter Tragestegen und Haltestegen die sich abdecken zu verstehen, dass das kleinere Element der beiden in einem Bereich an das größere Element der beiden anliegend angeordnet ist, so dass in Richtung der zu der Drehachse axialen Richtung das kleinere Element der beiden von dem größeren Element der beiden abgedeckt wird.

Bei einer besonders vorteilhaften Ausführungsform ist vorgesehen, dass die Radeinheit einen Sensor zur Detektierung des Abtastbereiches umfasst.

Dabei kann grundsätzlich jeglicher Sensor vorgesehen sein, welcher die periodisch variierende Struktur, beispielsweise die gezahnte Struktur, insbesondere periodisch abwechselnd angeordnete Materialbrücken und Durchbrüche erfasst.

Dabei ist es denkbar, dass der Sensor ein optischer Sensor ist, welcher optische Eigenschaften, insbesondere des Sensorkranzes in dem Abtastbereich, detektiert.

Bei einer besonders günstigen Ausführungsform ist vorgesehen, dass der Sensor ein magnetischer Sensor ist, welcher magnetfeldbeeinflussende Strukturen, insbesondere die magnetfeldbeeinflussende Struktur des Abtastbereiches, detektiert.

In vorteilhafter Weise ist vorgesehen, dass der Sensor als Hall-Sensor ausgebildet ist.

Insbesondere ist in vorteilhafter Weise vorgesehen, dass der Sensor die periodisch variierende Struktur, insbesondere die gezahnte Struktur in dem Abtastbereich detektiert.

Bei einer besonders günstigen Ausführungsform detektiert der Sensor den Abtastbereich in der zu der Drehachse radialen Richtung.

Bei einer weiteren, besonders vorteilhaften Ausführungsform detektiert der Sensor den Abtastbereich in der zu der Drehachse axialen Richtung.

Es ist vorgesehen, dass zumindest eine der Radeinheiten eine Bremszange umfasst, welche mit der Bremsscheibe bremsend zusammenwirkt.

Besonders zweckmäßig ist es, wenn die Nabe um die Drehachse drehbar beweglich an einer Radaufhängung der Radeinheit angeordnet ist.

Dabei ist in besonders vorteilhafter Weise vorgesehen, dass mindestens eine der Radeinheiten des Fahrrades eines oder mehrere der voranstehenden Merkmale umfasst, wodurch sich die voranstehend genannten Vorteile auf das Fahrrad übertragen.

Bei einer besonders günstigen Ausführungsform ist vorgesehen, dass die vordere Radeinheit eines oder mehrere der voranstehenden Merkmale umfasst und die hintere Radeinheit eines oder mehrere der voranstehenden Merkmale umfasst und somit in besonders günstiger Weise einer oder mehrere der voranstehend genannten Vorteile sich auf das Fahrrad übertragen.

Besonders bevorzugt ist es, wenn das Fahrrad ein muskelangetriebenes Antriebssystem umfasst.

Bei einer besonders vorteilhaften Ausführungsform ist vorgesehen, dass das Fahrrad einen Zusatzantrieb umfasst.

Dabei ist insbesondere vorgesehen, dass der Zusatzantrieb einen elektrischen Antriebsmotor umfasst.

Bei einer besonders vorteilhaften Ausführungsform ist vorgesehen, dass das Fahrrad ein Antiblockiersystem umfasst, wobei das Antiblockiersystem eine Steuerungseinheit und eine Druckregulierungseinheit umfasst, und die Sensoren der vorderen Radeinheit und der hinteren Radeinheit die Drehgeschwindigkeiten des Rades der vorderen Radeinheit und des Rades der hinteren Radeinheit an die Steuerungseinheit übermitteln und die Druckregulierungseinheit mit einem Hydrauliksystem der Bremsvorrichtung der vorderen Radeinheit, und beispielsweise der hinteren Radeinheit, verbunden ist, wobei die Steuerungseinheit die Druckregulierungseinheit in Abhängigkeit der ermittelten Drehgeschwindigkeiten des vorderen und des hinteren Rades ansteuert und bei Blockieren eines der Räder, beispielsweise wenn eines der Räder eine erheblich geringere Drehgeschwindigkeit bezogen auf die Drehgeschwindigkeit des anderen Rades bei einem Bremsvorgang aufweist, die Steuerungseinheit die Druckregulierungseinheit ansteuert, so dass die Druckregulierungseinheit in dem Hydrauliksystem den Druck vermindert, beispielsweise durch Umleiten von Hydraulikflüssigkeiten in einen Zwischenspeicher, und somit die Bremszange und der Bremsring weniger stark bremsend zusammenwirken und die Blockierung des Rades aufgehoben wird.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine Seitenansicht eines ersten Ausführungsbeispiels eines erfindungsgemäßen Fahrrads;
- Fig. 2: eine ausschnittsweise Seitenansicht eines ersten Ausführungsbeispiels einer erfindungsgemäßen vorderen Radeinheit für ein Fahrrad;
- Fig. 3: einen Schnitt III-III gemäß Fig. 2;
- Fig. 4: eine ausschnittsweise Seitenansicht eines ersten Ausführungsbeispiels einer erfindungsgemäßen hinteren Radeinheit für ein Fahrrad;
- Fig. 5: einen Schnitt V-V gemäß Fig. 4;
- Fig. 6: eine perspektivische Darstellung eines ersten Ausführungsbeispiels einer erfindungsgemäßen Nabe;
- Fig. 7: eine ausschnittsweise vergrößerte Darstellung des Schnittes III-III in einen Bereich eines ersten Ausführungsbeispiels einer erfindungsgemäßen Bremszange;
- Fig. 8: eine Seitenansicht eines ersten Ausführungsbeispiels einer erfindungsgemäßen Bremsscheibe;
- Fig. 9: eine Seitenansicht eines ersten Ausführungsbeispiels eines erfindungsgemäßen Sensorkranzes;
- Fig. 10: eine Schrägansicht des ersten Ausführungsbeispiels einer Bremsscheibe und eines Sensorkranzes, welche in einer Montageposition an der Nabe montiert sind;
- Fig. 11: eine Seitenansicht der Darstellung gemäß Fig. 10;
- Fig. 12: einen Schnitt XII-XII gemäß Fig. 11;
- Fig. 13: eine Schrägansicht des ersten Ausführungsbeispiels einer erfindungsgemäßen Bremsscheibe und eines erfindungsgemäßen Sensorkranzes in der Montageposition;
- Fig. 14: eine Seitenansicht des ersten Ausführungsbeispiels einer erfindungsgemäßen Bremsscheibe und eines erfindungsgemäßen Sensorkranzes in der Montageposition;
- Fig. 15: eine ausschnittsweise vergrößerte Darstellung gemäß Fig. 14;
- Fig. 16: einen Schnitt XVI-XVI gemäß Fig. 14 durch das erste Ausführungsbeispiel einer Bremsscheibe und eines Sensorkranz in der Montageposition, welcher durch einen abgedeckten Durchbruch verläuft;
- Fig. 17: einen Schnitt XVII-XVII gemäß Fig. 14 entlang eines Abtastbereiches durch die Bremsscheibe und den Sensorkranz gemäß des ersten Ausführungsbeispiels;
- Fig. 18: einen radialen Schnitt durch ein zweites Ausführungsbeispiel einer erfindungsgemäßen Bremsscheibe, eines erfindungsgemäßen Sensorkranz und einer erfindungsgemäßen Zwischenlage;
- Fig. 19: eine ausschnittsweise vergrößerte Darstellung gemäß Fig. 18;
- Fig. 20: eine Darstellung eines dritten Ausführungsbeispiels einer erfindungsgemäßen Bremszange;
- Fig. 21: eine Darstellung eines vierten Ausführungsbeispiels einer erfindungsgemäßen Nabe;
- Fig. 22: eine ausschnittsweise Seitenansicht des vierten Ausführungsbeispiels einer erfindungsgemäßen Radeinheit;
- Fig. 23: ein schematischer, radialer Schnitt durch ein zweites Ausführungsbeispiel eines erfindungsgemäßen Sensorkranzes und
- Fig. 24: eine Seitenansicht eines zweiten Ausführungsbeispiels eines erfindungsgemäßen Fahrrads.

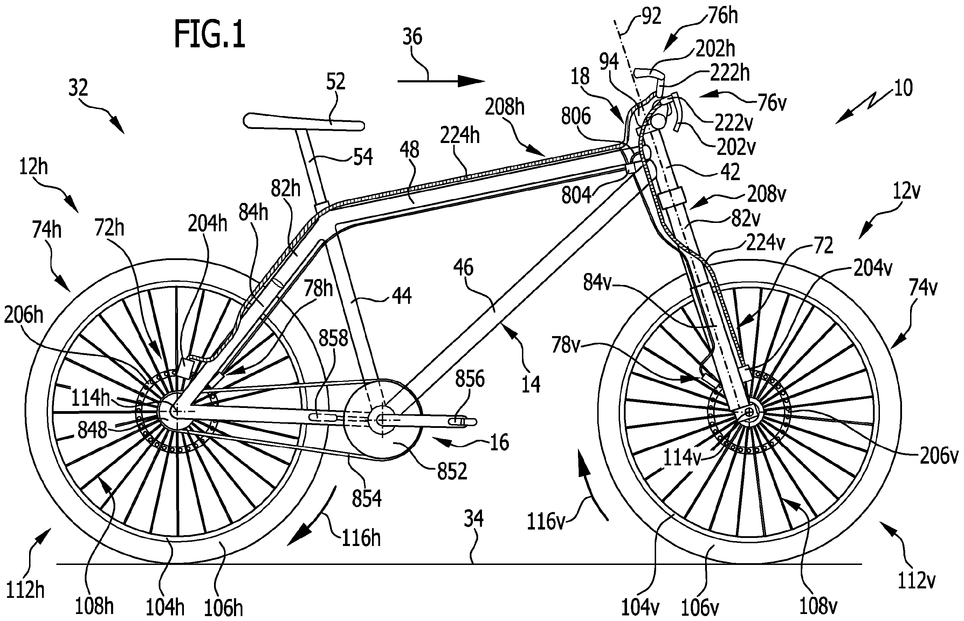

Ein in Fig. 1 beispielhaft dargestelltes und als Ganzes mit 10 bezeichnetes erstes Ausführungsbeispiel eines erfindungsgemäßen Fahrrades umfasst eine vordere Radeinheit 12v und eine hintere Radeinheit 12h, welche durch einen Rahmen 14 miteinander verbunden sind, sowie ein als Ganzes mit 16 bezeichnetes muskelangetriebenes Fahrradantriebssystem, welches durch die Muskelkraft eines Fahrers angetrieben wird, und ein Antiblockiersystem 18.

Dabei erstreckt sich das Fahrrad 10 im Wesentlichen in einer Hauptebene 32, welche in Fig. 1 im Wesentlichen der Darstellungsebene entspricht und bei dem in Fig. 1 auf einer horizontalen Standfläche 34 in Fahrbereitschaft stehenden Fahrrad 10 im Wesentlichen quer, insbesondere senkrecht zu der Standfläche 34 verläuft, und bezogen auf eine Fahrradausrichtung 36, welche bei einer Geradeausfahrt des Fahrrads 10 der Fahrtrichtung entspricht, ist die vordere Radeinheit 12v in einem vorderen Bereich des Fahrrads 10 angeordnet und die hintere Radeinheit 12h in einem hinteren Bereich des Fahrrads 10 angeordnet.

Der Rahmen 14 umfasst ein Steuerrohr 42, an welches die vordere Radeinheit 12v drehbar beweglich angeordnet ist, und eine hintere Strebe 44, an welche die hintere Radeinheit 12h angeordnet ist, wobei das Steuerrohr 42 und die hintere Strebe 44 durch ein erstes Rohr 46 und beispielsweise ein weiteres, zweites Rohr 48 miteinander verbunden sind.

An den Rahmen 14 ist ein Sattel 52 mit einem Sattelrohr 54 angeordnet.

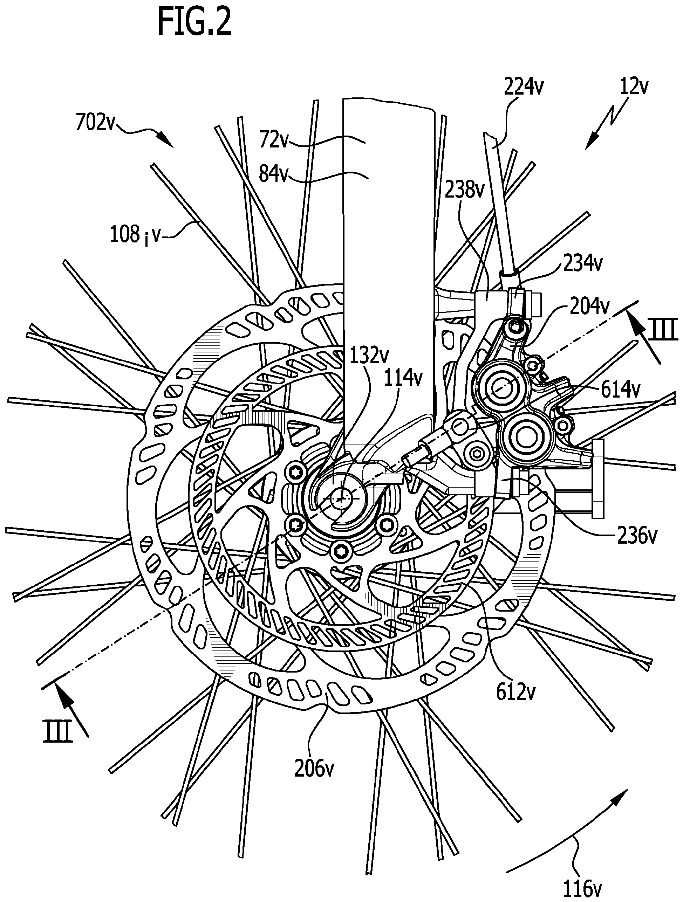

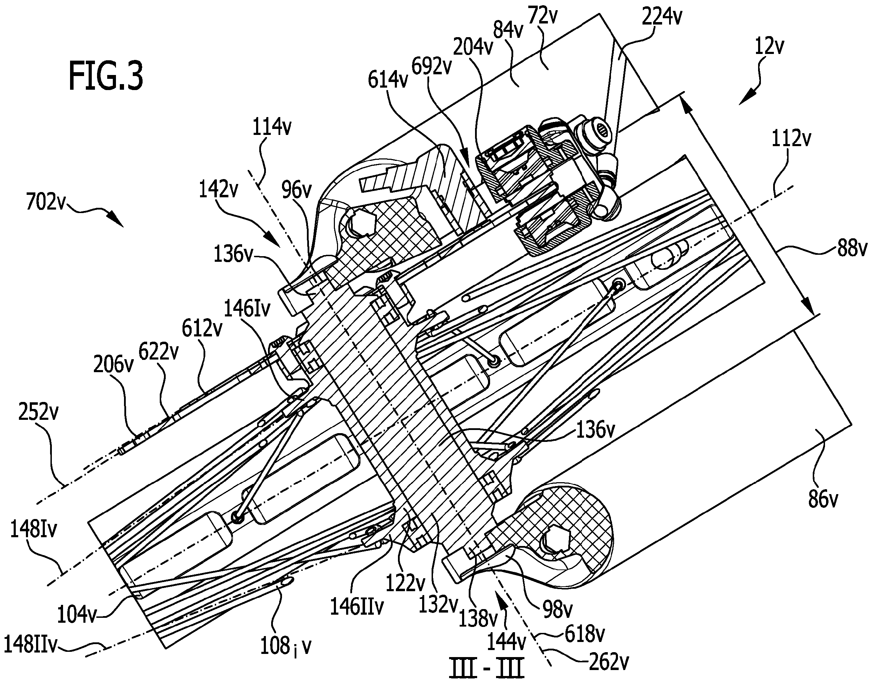

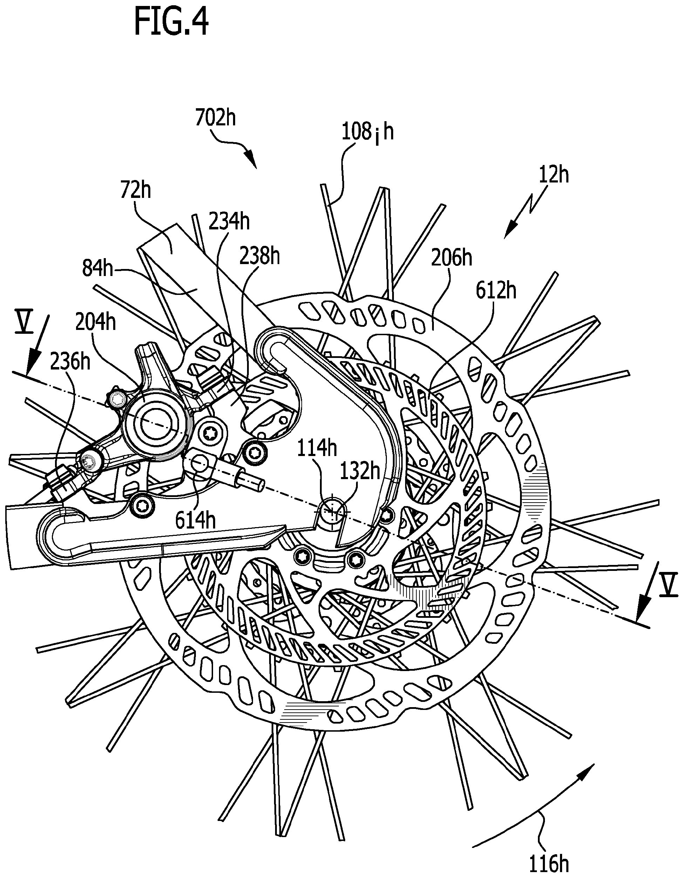

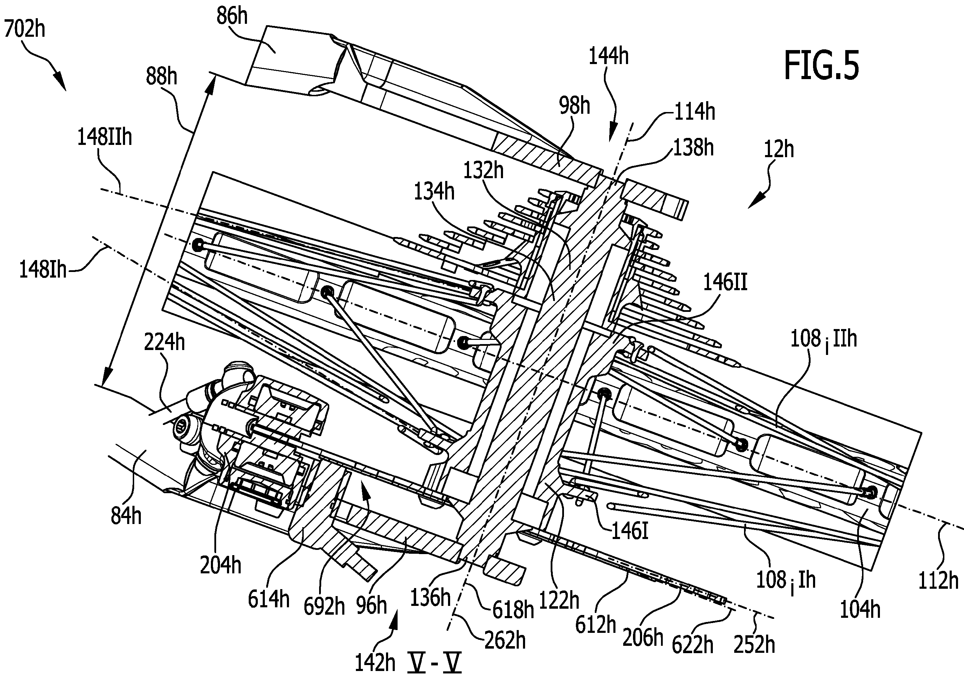

Die vordere Radeinheit 12v, welche in den Fig. 2 und 3 dargestellt ist, und die hintere Radeinheit 12h, welche in den Fig. 4 und 5 dargestellt ist, sind ähnlich aufgebaut und werden im Folgenden, soweit sie analog aufgebaut sind, gemeinsam beschrieben, wobei auf die Spezifizierung v und h, soweit diese nicht erforderlich ist, verzichtet wird.

Die Radeinheit 12 umfasst eine Radaufhängung 72, ein Rad 74, welches drehbar beweglich an der Radaufhängung 72 angeordnet ist, eine Bremsvorrichtung 76, welche bremsend auf das Rad 74 einwirkbar ist, so dass die Drehgeschwindigkeit des Rades 74 bei der bremsenden Einwirkung der Bremsvorrichtung 76 kleiner wird, sowie eine Sensoreinheit 78, mit welcher die Drehgeschwindigkeit des Rades 74 ermittelbar ist.

Die Radaufhängung 72 umfasst einen Schaft 82, ein erstes Gabelbein 84 und ein zweites Gabelbein 86, wobei die Gabelbeine 84 und 86 an dem Schaft 82 angeordnet sind.

Das erste Gabelbein 84 und das zweite Gabelbein 86 verlaufen im Wesentlichen zueinander parallel und sind mit einem Abstand 88 zueinander beabstandet, so dass das Rad 74 zwischen dem ersten Gabelbein 84 und dem zweiten Gabelbein 86 positionierbar ist.

Der Schaft 82v der vorderen Radeinheit 12v ist dabei insbesondere um eine Lenkachse 92 drehbar beweglich an das Steuerrohr 42 angeordnet, so dass die vordere Radeinheit 12v mit einem Lenker 94 lenkbar ist.

Der Schaft 82h der hinteren Radeinheit 12h ist beispielsweise an den Rahmen 14, insbesondere an die hintere Strebe 44, angeordnet.

Bei der Radaufhängung 72 ist ein erstes Ausfallende 96, welches beispielsweise an dem ersten Gabelbein 84 angeordnet ist, und ein zweites Ausfallende 98, welches beispielsweise an dem zweiten Gabelbein 86 angeordnet ist, zur Befestigung des Rades 74 vorgesehen.

Das Rad 74 umfasst eine Nabe 102, eine Felge 104, auf der ein luftgefüllter Reifen 106 aufgezogen ist, und mehrere Speichen 108, von denen in den Figuren nur einige Speichen 108ᵢ, ... beispielhaft gekennzeichnet sind, wobei die Speichen 108 die Felge 104 mit der Nabe 102 verbinden.

Dabei verläuft die Felge 104 im Wesentlichen entlang eines Kreises, der in einer Radebene 112 liegt und durch dessen Mittelpunkt eine geometrische Drehachse 114 verläuft, wobei die Drehachse 114 senkrecht zu der Radebene 112 verläuft und die Radebene 112 bei dem in Fig. 1 dargestellten Fahrrad 10 mit der Hauptebene 32 zusammenfällt, wobei jedoch die Vorderradebene 112v auch quer zu der Hauptebene 32 verlaufen kann, da das Vorderrad 14v an der drehbaren vorderen Radaufhängung 72v befestigt ist.

Dabei ist die Felge 104, insbesondere das Rad 74, in einer Umlaufrichtung 116 drehbar um die Drehachse 114 beweglich angeordnet.

Dabei verläuft die Drehrichtung 116 im Wesentlichen in der Radebene 112 und ist entlang einer Umdrehung um die Drehachse 114 stets senkrecht zu einer radialen Richtung der Drehachse 114.

Die Nabe 104 ist im Wesentlichen senkrecht zu der Radebene 112 und entlang der Drehachse 114 ausgerichtet, wie in Fig. 2 bis 7 dargestellt ist, und damit ist die Nabe 102 in der Radebene 112 zentriert zu der Felge 104 angeordnet, wie in Fig. 1 dargestellt ist.

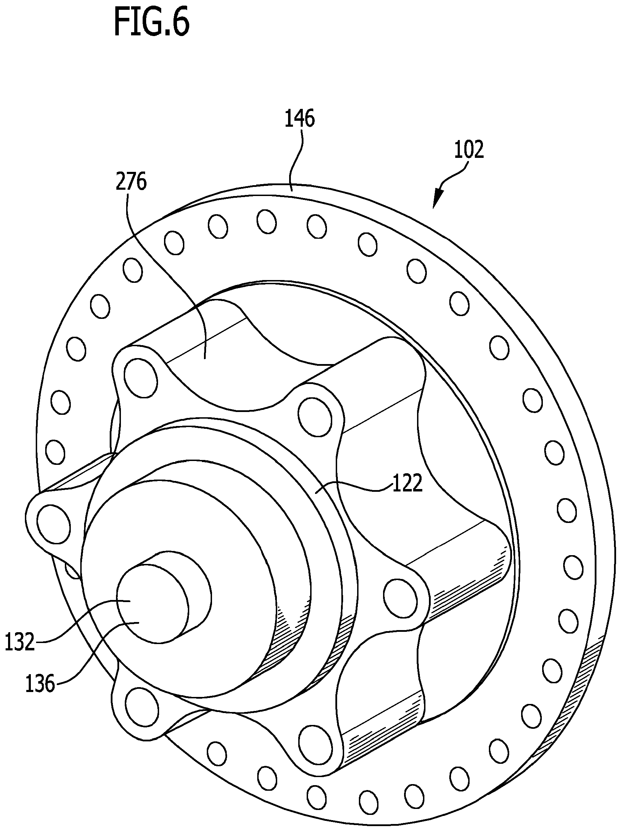

Die Nabe 102, welche ohne weitere Bauteile auch in Fig. 6 dargestellt ist, umfasst ein Nabengehäuse 122 und eine Radachse 132, welche entlang der Drehachse 114 ausgerichtet ist, wobei die Radachse 132 drehbar um die Drehachse 114 in dem Nabengehäuse 122 gelagert ist. Dabei ist ein Mittelbereich 134 der Radachse 132, welcher zwischen einem ersten Endbereich 136 und einem zweiten Endbereich 138 der Radachse 132 liegt, in dem Nabengehäuse 122 drehbar gelagert und der erste Endbereich 136 und der zweite Endbereich 138 der Radachse 132 ragen aus sich gegenüberliegenden Frontseiten 142 und 144 des Nabengehäuses 122 aus diesem heraus.

Das Rad 74 ist mit der Radachse 132 an der Radaufhängung 72 befestigt, wobei insbesondere der erste Endbereich 136 der Radachse 132 an dem ersten Ausfallende 96 angeordnet ist und der zweite Endbereich 138 der Radachse 132 an dem zweiten Ausfallende 98 angeordnet ist.

Das Nabengehäuse 122 umfasst einen ersten Ringbund 146I und einen zweiten Ringbund 146II, welche entlang der Drehachse 114 versetzt zueinander angeordnet sind und mit einem jeweils gleichen Abstand zu der Radebene 112 auf unterschiedlichen Seiten der Radebene 112 liegen, so dass der erste Ringbund 146I zwischen der Radebene 112 und der Frontseite 142 positioniert ist und der zweite Ringbund 146II zwischen der Radebene 112 und der zweiten Frontseite 144 positioniert ist. Die Ringbünde 146I und 146II sind zur Befestigung der Speichen 108 vorgesehen.

Von den Speichen 108 sind einige Speichen 108I an den ersten Ringbund 146I angeordnet und die restlichen Speichen 108II sind an dem zweiten Ringbund 146II angeordnet, wobei die Anzahl der Speichen 108I und die Anzahl der Speichen 108II jeweils der Hälfte der Gesamtanzahl der Speichen 108 entspricht.

In den Figuren sind nur einige Speichen 108ᵢI, ... der Speichen 108I und einige Speichen 108iII, ... der Speichen 108II beispielhaft gekennzeichnet.

Soweit die Ausgestaltung und Anordnung der Speichen 108I und des ersten Ringbundes 146I sowie der Speichen 108II und des zweiten Ringbundes 146II analog sind, werden diese im Folgenden gemeinsam beschrieben und auf die Spezifizierung I und II wird, soweit es möglich ist, verzichtet.

Die Speichen 108 erstrecken sich von dem Ringbund 146, an welchem sie befestigt sind, bis zu der Felge 104, an welcher sie ebenso befestigt sind, so dass die Felge 104 mit dem Nabengehäuse 122 relativ zu der Radachse 132 um die Drehachse 114 rotierbar ist.

Die Speichen 108 verlaufen dabei im Wesentlichen in einer Speichenfläche 148, wobei in einem Bereich der Drehachse 114 die Speichenfläche 148 von der Radebene 112 beabstandet ist, insbesondere mit einem Abstand, mit welchem auch der Ringbund 146 zu der Radebene 112 beabstandet ist, so dass die Speichenfläche 148 von dem Ringbund 146 ausgehend verläuft, und in der zu der Drehachse 114 radialen Richtung die Speichenfläche 148 auf die Radebene 112 zu verläuft und im Bereich der Felge 104 auf die Radebene 112 trifft und die Speichenfläche 148 dabei zu der Drehachse 114 rotationssymmetrisch ist und konusartig ausgebildet ist.

Dabei verlaufen die erste Speichenfläche 148I und die zweite Speichenfläche 148II im Wesentlichen spiegelsymmetrisch zur Radebene 112, so dass also die spitzenartigen Bereiche der konusartigen Speichenflächen 148I und 148II entlang der Drehachse 114 beabstandet sind und von den spitzenartigen Bereichen ausgehend die Speichenflächen 148I und 148II aufeinander zu verlaufen.

Die Bremsvorrichtung 76 umfasst eine Betätigungseinheit 202, eine Bremszange 204, die insbesondere an der Radaufhängung 72 angeordnet ist, und eine Bremsscheibe 206, welche an der Nabe 102, insbesondere an dem Nabengehäuse 122, angeordnet ist.

Dabei sind die Betätigungseinheit 202, beispielsweise ein Hebel, und die Bremszange 204 über ein Hydrauliksystem 208 druckübertragend verbunden, so dass durch ein Betätigen der Betätigungseinheit 202 die Bremszange 204 betätigt wird, wodurch die Bremszange 204 bremsend mit der Bremsscheibe 206 zusammenwirkt und somit eine Drehbewegung der Bremsscheibe 206 verringert wird und da die Bremsscheibe 206 an dem Rad 74 angeordnet ist, wird somit auch eine Drehgeschwindigkeit einer Drehbewegung des Rades 74 verringert.

Das Hydrauliksystem 208 umfasst einen Geberzylinder 222, der über eine Druckleitung 224 mit der Bremszange 204 verbunden ist.

Die Bremszange 204 umfasst ein Bremszangengehäuse 232, welches mit einer ersten Halterung 234 und einer zweiten Halterung 236 an der Radaufhängung 72, insbesondere an einem der Gabelbeine 84, 86, beispielsweise mit einem Bremszangenhalter 238, montiert ist.

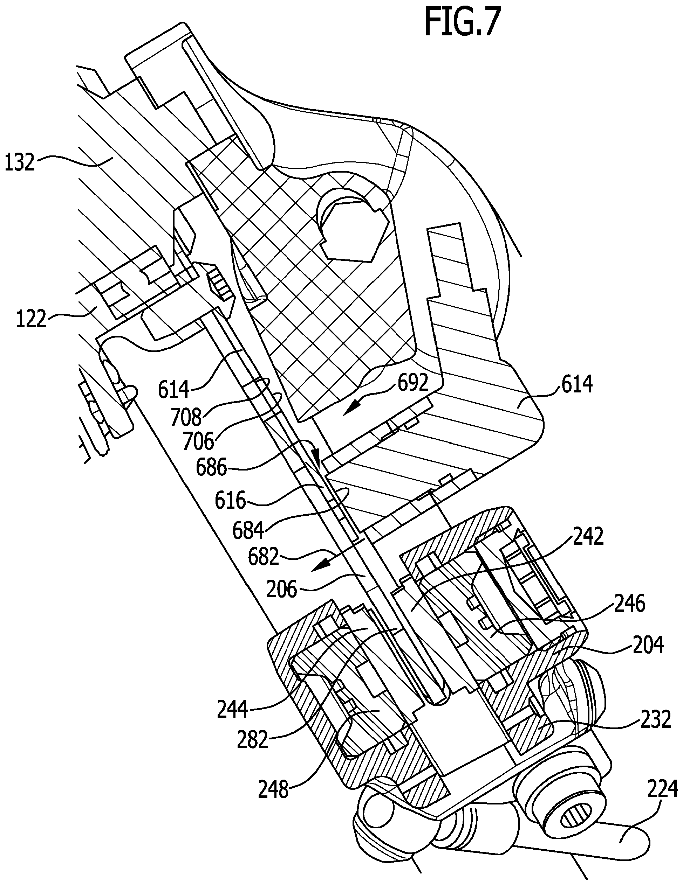

Die Bremszange 204, welche vergrößert in Fig. 7 dargestellt ist, umfasst außerdem einen ersten Bremsbelag 242 und einen zweiten Bremsbelag 244, welche an dem Bremszangengehäuse 232 beweglich angeordnet sind, wobei die Bremsbeläge 242 und 244 beabstandet zueinander angeordnet sind, so dass die Bremsscheibe 206 zwischen den Bremsbelägen 242 und 244 positionierbar ist.

Der erste Bremsbelag 242 wird von einem ersten Kolben 246 beaufschlagt und der zweite Bremsbelag 244 wird von einem zweiten Kolben 248 beaufschlagt, wobei der erste Kolben 246 und der zweite Kolben 248 mit dem Hydrauliksystem 208, insbesondere über die Druckleitung 242, verbunden sind.

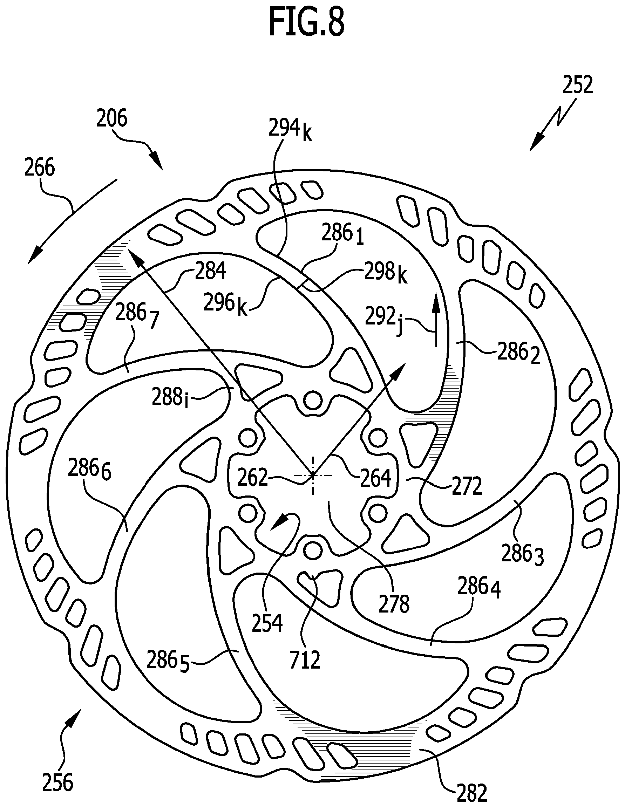

Die Bremsscheibe 206 erstreckt sich im Wesentlichen in einer Bremsscheibenebene 252, welche in Fig. 8 der Darstellungsebene entspricht, von einem Innenbereich 254 bis zu einem Außenbereich 256, wobei die Bremsscheibe 206 sich zu einer Bremsscheibenachse 262, welche im Wesentlichen senkrecht zu der Bremsscheibenebene 252 verläuft, in einer zu der Bremsscheibenachse 262 radialen Richtung 264 von dem Innenbereich 254 bis zu dem Außenbereich 256 erstreckt und der Außenbereich 256 bezogen auf die radiale Richtung 264 radial außerhalb des Innenbereiches 254 liegt und der Außenbereich 256 in der Bremsscheibenebene 252 den Innenbereich 254 entlang einer Umlaufrichtung 266 um die Bremsscheibenachse 262 umrandet.

Insbesondere sind bei dem Ausführungsbeispiel die vordere Bremsscheibe 206v und die hintere Bremsscheibe 206h gleich groß. Bei einer Variante ist vorgesehen, dass die Bremsscheiben 206v und 206h unterschiedliche Größen aufweisen.

In dem Innenbereich 254 der Bremsscheibe 206 ist ein Montagering 272 vorgesehen, welcher mit einem Befestigungselement 274 an die Nabe 102, insbesondere an ein Halteelement 276, welches beispielsweise flanschähnlich ausgebildet ist, des Nabengehäuses 122, montierbar ist, so dass die Bremsscheibe 206 fest mit dem Nabengehäuse 122 verbunden ist.

Dazu umfasst das Halteelement 276 und der Montagering 272 gemäß den Ausführungsbeispielen in Fig. 6 und 8 jeweils sechs Löcher und das Befestigungselement 274 umfasst sechs Verbindungsteile, welche für je ein Loch des Montagerings 272 und ein Loch des Halteelements 276 vorgesehen sind und so der Montagering 272 mit den Verbindungsteilen des Befestigungselements 274 mit dem Halteelement 276 verbunden ist.

In dem Montagering 272 ist zentriert eine Achsendurchgriffsöffnung 278 angeordnet, durch welche die Radachse 132 durchgreifen kann und wobei die Bremsscheibenachse 262 durch die Achsendurchgriffsöffnung 278 hindurchverläuft.

In dem Außenbereich 256 der Bremsscheibe 206 ist ein Bremsring 282, welcher ringförmig die Bremsscheibenachse 262 im Wesentlichen mit einem Radius 284 umgibt, angeordnet und die Bremsbeläge 242 und 244 beaufschlagen den Bremsring 282 bei einem Bremsvorgang.

Der Montagering 272 und der Bremsring 282 sind durch Tragestege 286 miteinander verbunden wobei beispielsweise die Tragestege 286 sich mit Zusatztragestegen 288 an dem Montagering 272 abstützen.

Dabei sind in den Figuren nur einige Tragestege 286ᵢ, ... der Tragestege 286 gekennzeichnet und nur einige Zusatztragestege 288ᵢ, ... der Zusatztragestege 288 gekennzeichnet.

In der Ausführungsform gemäß Fig. 8 sind N = 7 Tragestege 286₁ bis 286₇ vorgesehen.

Dabei sind die Tragestege 286 länglich ausgebildet und erstrecken sich von dem Innenbereich 254 zu dem Außenbereich 256 der Bremsscheibe 206, beispielsweise erstrecken sich die Tragestege 286 bogenförmig.

Jeder einzelne Tragesteg 286ᵢ der Tragestege 286 erstreckt sich länglich von dem Innenbereich 254 zu dem Außenbereich 256 in eine Erstreckungsrichtung 292ᵢ, wobei die Erstreckungsrichtung 292ᵢ geneigt zu der zu der Bremsscheibenachse 262 radialen Richtung 264 verläuft.

Jeder Tragesteg 286ᵢ der Tragestege 286 erstreckt sich quer zu seiner Erstreckungsrichtung 292ᵢ von einem ersten Rand 294ᵢ zu einem zweiten Rand 296ᵢ, wobei ein Abstand der Ränder 294ᵢ und 296ᵢ eine Breite 298ᵢ des Tragesteges 286ᵢ darstellt und die Breite 298ᵢ bezogen auf eine zu der radialen Richtung 264 quer verlaufenden Richtung, insbesondere im Wesentlichen in der die Bremsscheibenachse 262 umlaufenden Umlaufrichtung 266, gemessen wird.

In den Figuren sind nur einige Ränder 294ᵢ, ... und 296ᵢ, ... der Ränder 294 und 296 gekennzeichnet.

Bei dem Ausführungsbeispiel sind die Breiten 298ᵢ der Tragestege 286ᵢ entsprechend einer Breite 298 gleich groß. Bei einer Variante ist vorgesehen, dass die Breiten 298ᵢ, ... unterschiedlich groß sind.

Insbesondere sind die Tragestege 286 in Richtung der Umlaufrichtung 266 periodisch angeordnet, beispielsweise ist die Anordnung der Tragestege 286 n-drehsymmetrisch bezüglich der Bremsscheibenachse 262 ausgebildet, d.h. dass die Anordnung der Stege 286 bezüglich einer Drehung um die Bremsscheibenachse 262 mit einem Winkel 360°/n symmetrisch ist, wobei n eine natürliche Zahl ist und in dem Ausführungsbeispiel der Anzahl N der Tragestege 286 entspricht.

Damit funktioniert die Bremsvorrichtung 76 wie folgt.

Die Betätigungseinheit 202 wirkt, beispielsweise mit dem Hebel, auf den Geberzylinder 222 des Hydrauliksystems 208 ein, wodurch der Geberzylinder 222 eine Druckerhöhung in dem Hydrauliksystem 208 erzeugt, welche durch die Druckleitung 224 zu der Bremszange 204 mittels einer Hydraulikflüssigkeit übertragen wird, wodurch die Bremszange 204 betätigt wird.

Dabei wird in der Bremszange 204 der erhöhte Druck in dem Hydrauliksystem 208 in eine mechanische Bewegung der Kolben 246 und 248 umgesetzt, wodurch der erste Kolben 246 den ersten Bremsbelag 242 beaufschlagt und der zweite Kolben 248 den zweiten Bremsbelag 244 beaufschlagt und dadurch der erste Bremsbelag 242 und der zweite Bremsbelag 244 sich aufeinander zubewegen, so dass der zwischen dem ersten Bremsbelag 242 und dem zweiten Bremsbelag 244 positionierte Bremsring 282, welcher bei einer Fahrt des Fahrrades 10 rotiert, von je einer Seite von dem ersten Bremsbelag 242 und dem zweiten Bremsbelag 244 beaufschlagt wird und durch die dadurch entstehende Reibung die Drehgeschwindigkeit des Bremsrings 282 und folglich auch die Drehgeschwindigkeit des mit dem Bremsring 282 verbundenen Rades 74, verringert wird.

Die Sensoreinheit 78 umfasst einen Sensorkranz 612, welcher an dem Rad 74 angeordnet ist, und einen Sensor 614, der auf einen Abtastbereich 616 des Sensorkranzes 612 ausgerichtet ist und diesen Abtastbereich 616 detektiert, insbesondere eine Relativbewegung des Abtastbereiches 616 relativ zu dem Sensor 614 detektiert.

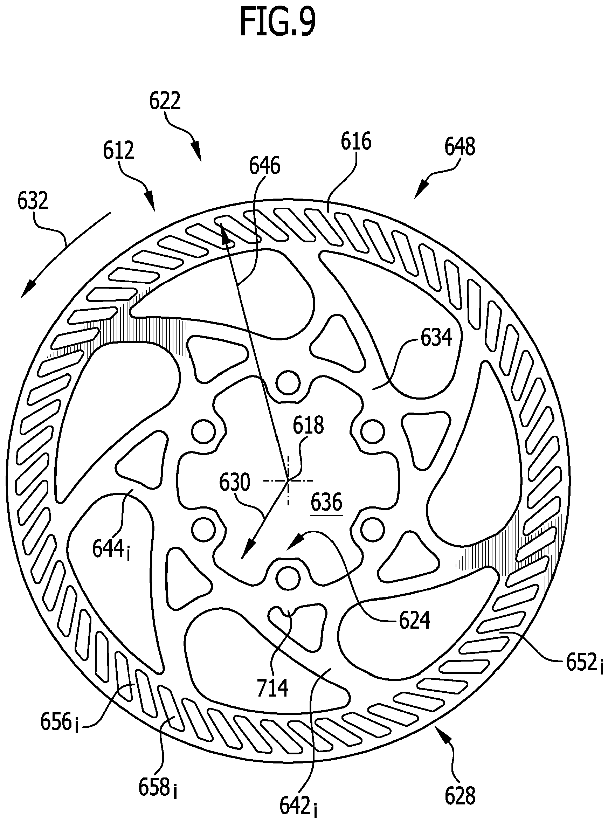

Der Sensorkranz 612 gemäß dem in Fig. 9 dargestellten Ausführungsbeispiel erstreckt sich im Wesentlichen in einer zu einer Sensorkranzachse 618 senkrecht verlaufenden Sensorkranzebene 622, wobei in Fig. 9 die Sensorkranzebene 622 im Wesentlichen der Darstellungsebene entspricht und die Sensorkranzachse 618 senkrecht zu der Darstellungsebene verläuft, und erstreckt sich in der Sensorkranzebene 622 von einem Innenbereich 624 bis zu einem Außenbereich 628, wobei der Innenbereich 624 bezogen auf eine zu der Sensorkranzachse 618 radialen Richtung 630 relativ zu dem Außenbereich 628 radial inwärts liegt und wobei der Innenbereich 624 und der Außenbereich 628 die Sensorkranzachse 618 in eine Umlaufrichtung 632 herum umschließen, so dass insbesondere der Außenbereich 628 den Innenbereich 624 entlang der Umlaufrichtung 632 um die Sensorkranzachse 618 herum in der Sensorkranzebene 622 umrandet.

Dabei ist bei diesem Ausführungsbeispiel der Sensorkranz 612 im Wesentlichen planar ausgebildet, so dass insbesondere der Innenbereich 624 und der Außenbereich 628 des Sensorkranzes 612 im Wesentlichen in der Sensorkranzachse 618 angeordnet sind.

In dem Innenbereich 624 des Sensorkranzes 612 ist ein Montagering 634 angeordnet, mit welchem der Sensorkranz 612 an die Nabe 102 montierbar ist.

Bei der Ausführungsform gemäß Fig. 9 ist der Montagering 634 in analoger Weise wie der Montagering 272 der Bremsscheibe 206 ausgebildet, so dass vollinhaltlich auf die Ausführungen zu demselben verwiesen werden kann.

In dem Innenbereich 624 des Sensorkranzes 612 ist eine Achsendurchgriffsöffnung 636 angeordnet, wobei die Sensorkranzachse 618 durch die Achsendurchgriffsöffnung 636 hindurchverläuft und insbesondere die Achsendurchgriffsöffnung im Wesentlichen kreisförmig ausgebildet ist und zentriert zu der Sensorkranzachse 618 angeordnet ist.

Dabei umschließt der Montagering 634 die Achsendurchgriffsöffnung 636 in der Sensorkranzebene 622 entlang der Umlaufrichtung 632 um die Sensorkranzachse 618 herum.

Der Innenbereich 624 des Sensorkranzes 612, insbesondere der Montagering 634, und der Außenbereich des Sensorkranzes 612, beispielsweise der Abtastbereich 616 des Sensorkranzes 612, werden durch Haltestege 642 gehalten.

Dabei sind in den Figuren nur einige Haltestege 642ᵢ, ... der Haltestege 642 gekennzeichnet.

Beispielsweise verlaufen die Haltestege 642 bogenförmig von dem Innenbereich 624 zu dem Außenbereich 628.

Die Haltestege 642 erstrecken sich länglich und geneigt zu der zu der Sensorkranzachse 618 radialen Richtung.

Insbesondere sind die Haltestege 642 bezogen auf ihre längliche Erstreckung, insbesondere bezogen auf die Erstreckung quer zu der zu der Sensorkranzachse 618 radialen Richtung, etwas kürzer ausgebildet als die Tragestege 286 der Bremsscheibe 206 bezüglich deren längliche Erstreckung.

Dabei sind die Haltestege 642 im Wesentlichen ähnlich zu den Tragestegen 286 der Bremsscheibe 206 ausgebildet, insbesondere bezüglich deren Orientierung zu der zu der Sensorkranzachse 618 bzw. der Bremsscheibenachse 262 radialen Richtung, bezüglich ihrer Breite quer zu der zu der Achse 618 bzw. 262 radialen Richtung und bezüglich der Krümmung der bogenförmigen Ausbildung.

Dabei sind bei dem Ausführungsbeispiel genauso viele Haltestege 642 bei dem Sensorkranz 612 vorgesehen, wie Tragestege 286 bei der Bremsscheibe 206 vorgesehen sind.

Die Haltestege 642 sind bezüglich der Sensorkranzachse 618 drehsymmetrisch angeordnet, d.h. dass die Anordnung der Haltestege 642 bezüglich einer Drehung mit einem Winkel 360°/h um die Sensorkranzachse 618 symmetrisch ist, wobei h eine natürliche Zahl ist und bei dem Ausführungsbeispiel h der Anzahl der Haltestege 642 entspricht.

Außerdem stützen sich die Haltestege 642 mit Zusatzhaltestegen 644 zusätzlich an dem Montagering 634 ab, wobei für jeden der Haltestege 642 einer der Zusatzhaltestege 644 vorgesehen ist.

In den Figuren sind nur einzelne Zusatzhaltestege 644ᵢ, ... der Zusatzhaltestege 644 gekennzeichnet.

In dem Außenbereich 628 ist der Abtastbereich 616 des Sensorkranzes 612 angeordnet, wobei der Abtastbereich 616 im Wesentlichen ringförmig um die Sensorkranzachse 618 mit einem Radius 646 ausgebildet ist und der ringförmige Abtastbereich 616 im Wesentlichen zentriert zu der Sensorkranzachse 618 angeordnet ist. Dabei ist der Radius 646 des Abtastbereiches 616 kleiner als der Radius 284 des Bremsrings 282.

Der Abtastbereich 616 weist eine periodisch variierende Struktur 648 auf, wobei die periodisch variierende Struktur 648 entlang der Umlaufrichtung 632 um die Sensorkranzachse 618 in einer ihrer Eigenschaften periodisch variiert.

Dabei ist die periodisch variierende Struktur 648 m-drehsymmetrisch zu der Sensorkranzachse 618 ausgebildet, d.h. dass die periodisch variierende Struktur 648 bezüglich einer Drehung um einen Winkel 360°/m symmetrisch ist, wobei m der Anzahl N der Tragestege 286 der Bremsscheibe 206 oder einem ganzzahligen Vielfachen davon entspricht, wobei in dem Ausführungsbeispiel m = 56 ist und somit dem 8-fachen der Anzahl N der Tragestege 286 entspricht.

Bei dem Ausführungsbeispiel ist die periodisch variierende Struktur 648 als eine gezahnte Struktur ausgebildet, wobei die gezahnte Struktur umlaufseitig entlang der Umlaufrichtung 632 um die Sensorkranzachse 618 in dem Abtastbereich 616 entlang verläuft.

Dabei wird die gezahnte Struktur durch Zähne 652 ausgebildet, welche im Wesentlichen in der Sensorkranzebene 622 verlaufen und insbesondere geneigt zu der zu der Sensorkranzachse 618 radialen Richtung verlaufen, insbesondere ist die Ausrichtung der Zähne 652 in analoger Weise ausgebildet wie die Ausrichtung der Tragestege 286 der Bremsscheibe 206 zu der zu der Bremsscheibenachse 262 radialen Richtung 264.

Dabei sind in den Figuren nur einige Zähne 652ᵢ, ... der Zähne 652 gekennzeichnet.

Dabei sind die Zähne 652 länglich entlang einer Erstreckungsrichtung, welche schräg zu der zu der Sensorkranzachse 618 radialen Richtung orientiert ist, ausgebildet.

Die Zähne 652 werden durch Materialbrücken 656 gebildet, wobei zwischen jeder der Materialbrücken 656 ein Durchbruch 658 angeordnet ist.

Dabei sind in den Figuren nur einige Durchbrüche 658ᵢ, ... der Durchbrüche 658 gekennzeichnet und nur einige Materialbrücken 656ᵢ, ... der Materialbrücken 656 gekennzeichnet.

Dabei sind die Materialbrücken 656 und die Durchbrüche 658 entlang der Umlaufrichtung 632 um die Sensorkranzachse 618 periodisch alternierend angeordnet und bilden damit eine bezüglich der Sensorkranzachse 618 und eines Winkels der kleiner ist als 360° drehsymmetrische Anordnung.

Die Anzahl M der Durchbrüche 658 entspricht im Wesentlichen der Periodizität der gezahnten Struktur, so dass die Anzahl M an Durchbrüchen m oder einem ganzzahligen Vielfachen von m entspricht, wobei die gezahnte Struktur m-drehsymmetrisch ausgebildet ist und bei dem Ausführungsbeispiel M = 56 ist und M = m ist.

Die Materialbrücken 656 sind im Wesentlichen gleichgeformt und quer zu der Umlaufrichtung 632 angeordnet und verlaufen geneigt zu der zu der Sensorkranzachse 618 radialen Richtung und sind somit insbesondere in ähnlicher Weise ausgerichtet wie die Tragestege 286 der Bremsscheibe 206 zu der zu der Bremsscheibenachse 262 radialen Richtung 264 ausgerichtet sind.

Die Durchbrüche 658 erstrecken sich geneigt zu der zu der Sensorkranzachse 618 radialen Richtung und verlaufen quer zu der Umlaufrichtung 632 und sind dabei in ähnlicher Weise ausgerichtet wie die Materialbrücken 656.

Die Durchbrüche 658 weisen eine Breite quer zu ihrer länglichen Erstreckung, also insbesondere im Wesentlichen in Richtung der Umlaufrichtung 632 auf, welche kleiner ist als die Breite 298 der Tragestege 286 der Bremsscheibe 206.

Die Materialbrücken 656 sind stark ein Magnetfeld beeinflussend ausgebildet, beispielsweise aus einem ein Magnetfeld stark beeinflussenden Material ausgebildet.

Somit bildet die periodisch variierende Abfolge von einer der Materialbrücken 656, die stark magnetfeldbeeinflussend ist, und einem der Durchbrüche 658, der höchstens schwach ein Magnetfeld beeinflusst, eine periodisch variierend unterschiedlich stark magnetfeldbeeinflussende Struktur aus, wobei die Stärke der Magnetfeldbeeinflussung bei einem Übergang von einer der Materialbrücken 656 zu einem der Durchbrüche 658 sprunghaftartig sich ändert.

Dabei weist bei dem Ausführungsbeispiel die periodisch variierend unterschiedlich stark magnetfeldbeeinflussende Struktur entlang der Umlaufrichtung 632 um die Sensorkranzachse 618 die gleiche Periodizität wie die gezahnte Struktur auf.

Der Sensor 614 detektiert die periodisch variierende Struktur 648 des Abtastbereichs 616, insbesondere erfasst der Sensor 614 die Materialbrücken 656 und die Durchbrüche 658, beispielsweise die Übergänge von den Materialbrücken 656 zu den Durchbrüchen 658.

In dem Ausführungsbeispiel ist der Sensor 614 beispielhaft als magnetischer Sensor ausgebildet, so dass die periodisch variierend unterschiedlich stark magnetfeldbeeinflussende Struktur des Abtastbereiches 616 bei einer Relativbewegung relativ zu dem Sensor 614 ein periodisch variierendes Signal auslöst.

Beispielsweise ist der Sensor 614 als Hall-Sensor ausgebildet, so dass unterschiedliche Teilbereiche der unterschiedlich stark magnetfeldbeeinflussenden Struktur des Abtastbereiches 616, insbesondere die Anordnung der abwechselnd angeordneten Materialbrücken 656 und Durchbrüche 658, eine unterschiedlich große Hall-Spannung in dem Sensor 614 erzeugen, und damit der Sensor 614 die periodisch variierende Struktur 648 detektiert.

Bei einer Variante erzeugt der Sensor 614 ein Magnetfeld und detektiert wie dieses Magnetfeld durch magnetfeldbeeinflussende Strukturen, die nicht weiter als eine Reichweite 682 des Sensors 614 von diesem entfernt sind, beeinflusst wird.

Dabei umfasst der Sensor 614 insbesondere eine Sensorfläche 684, an welche sich ein Detektierungsbereich 686, welcher außerhalb des Sensors 614 liegt und sich im Wesentlichen nicht weiter als die Reichweite 682 von der Sensorfläche 684 ausgehend erstreckt, anschließt, wobei der Sensor 614 magnetfeldbeeinflussende Strukturen innerhalb des Detektierungsbereiches 686 detektiert.

Beispielsweise durchströmt ein elektrischer Strom die Sensorfläche 684, wobei durch den Hall-Effekt bei einem die Sensorfläche 684 durchlaufenden Magnetfeld, beispielsweise ein durch die periodisch variierend unterschiedlich stark magnetfeldbeeinflussende Struktur, insbesondere die abwechselnd angeordneten Materialbrücken 656 und Durchbrüche 658, unterschiedlich stark ausgebildetes Magnetfeld, sich eine Hall-Spannung senkrecht zu einer Fließrichtung des elektrischen Stromes ausbildet und durch Auswerten dieser Hall-Spannung, deren Größe von der Relativposition der periodisch variierend unterschiedlich stark magnetfeldbeeinflussenden Struktur zu dem Sensor 614 abhängt, der Sensor 614 die periodisch variierende Struktur 648, insbesondere die Materialbrücken 656 und die Durchbrüche 658 detektiert. Der Sensor 614 ist in einem Sensorbereich 692 der Radeinheit 12 beispielsweise an den Bremszangenhalter 238 angeordnet.

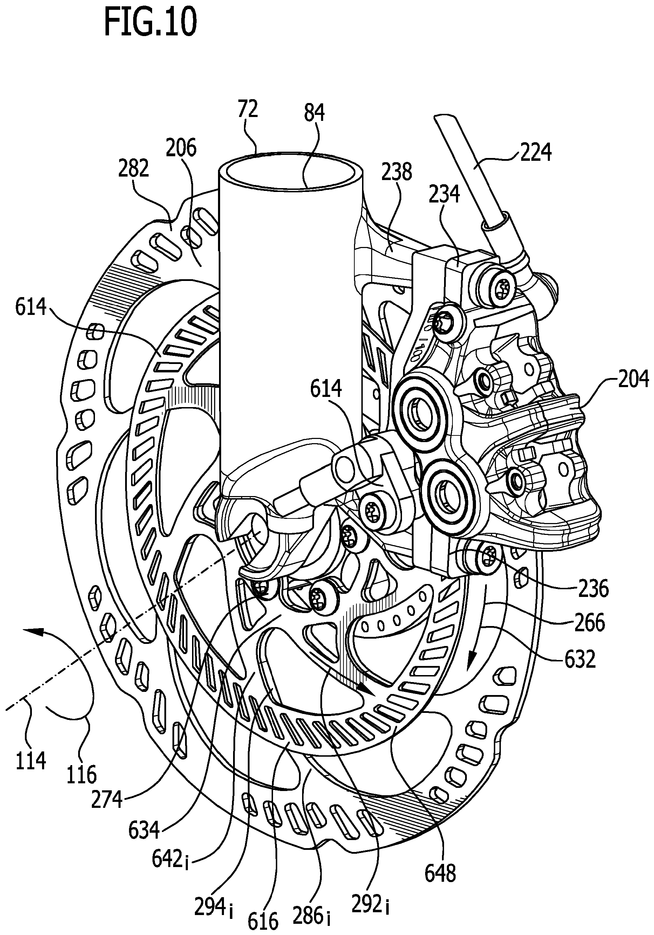

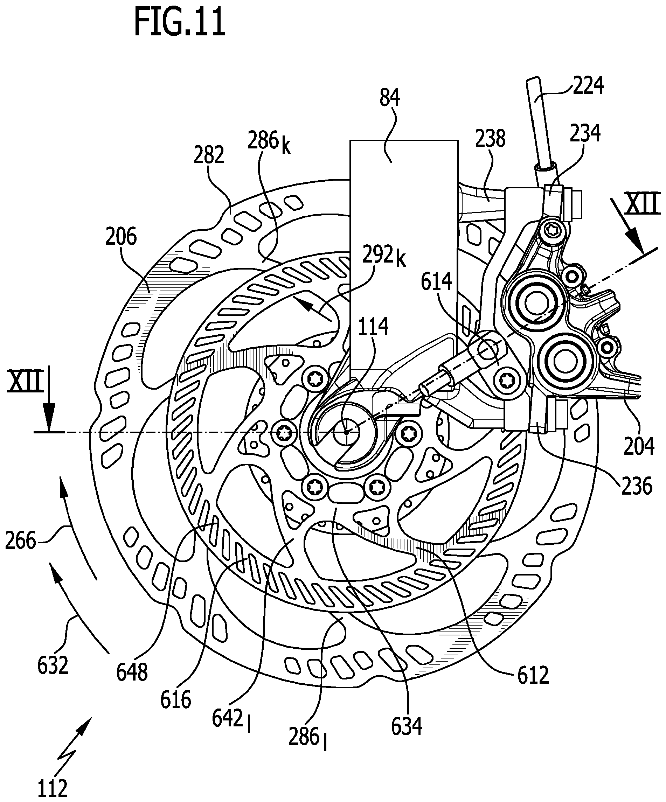

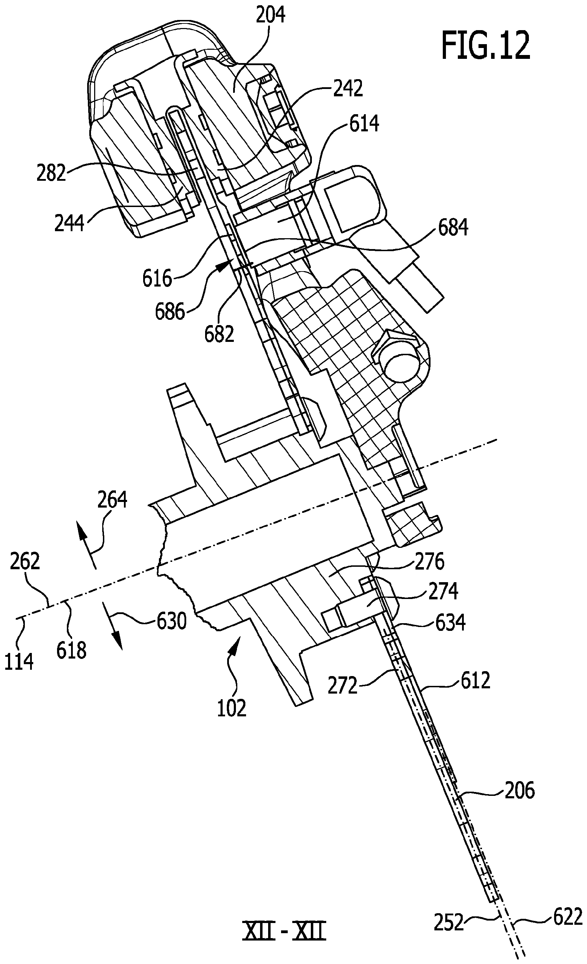

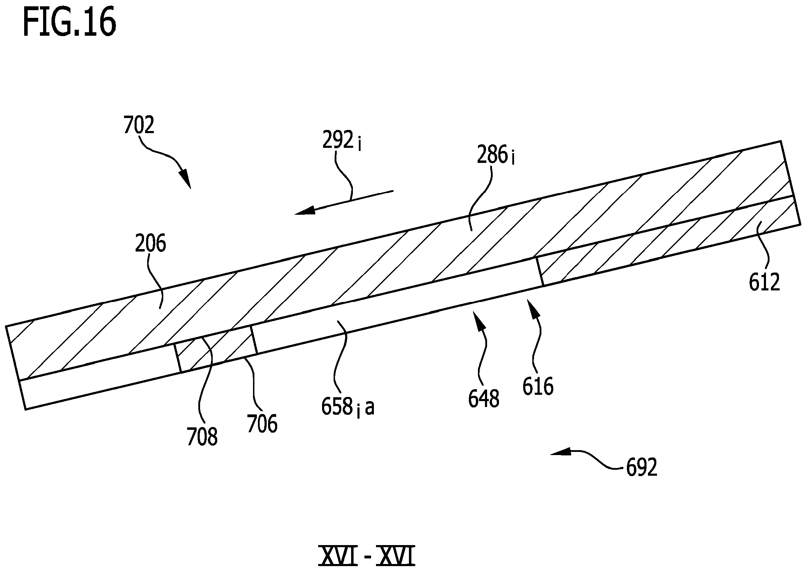

In einer Montageposition 702 sind die Bremsscheibe 206 und der Sensorkranz 612 aneinander liegend angeordnet, bei dem Ausführungsbeispiel gemäß den Fig. 10 bis 17 liegen die Bremsscheibe 206 und der Sensorkranz 612 unmittelbar aneinander, und die Bremsscheibenachse 262 und die Sensorkranzachse 618 fallen mit der Drehachse 114 zusammen.

Damit liegen die Achsendurchgriffsöffnungen 278 und 636 der Bremsscheibe 206 und des Sensorkranzes 612 aufeinander und bilden eine gemeinsame Achsendurchgriffsöffnung.

Der Sensor 614 ist nahe zu dem Abtastbereich 616 liegend angeordnet, so dass ein Teilbereich des Abtastbereiches 616 nicht weiter als die Reichweite 682 des Sensors 614 von dem Sensor 614 entfernt ist und somit dieser Teilbereich des Abtastbereiches 616 in dem Detektierungsbereich 686 des Sensors 614 liegt.

Damit schließt sich der Sensorbereich 692 an eine Sensorseite 706 des Sensorkranzes 612 an, wobei die Sensorseite 706 in der Montageposition 702 dem Sensor 614 zugewandt ist, und an einer Abdeckungsseite 708 des Sensorkranzes 612, die der Sensorseite 706 gegenüberliegt, ist in der Montageposition 702 die Bremsscheibe 206 anliegend angeordnet.

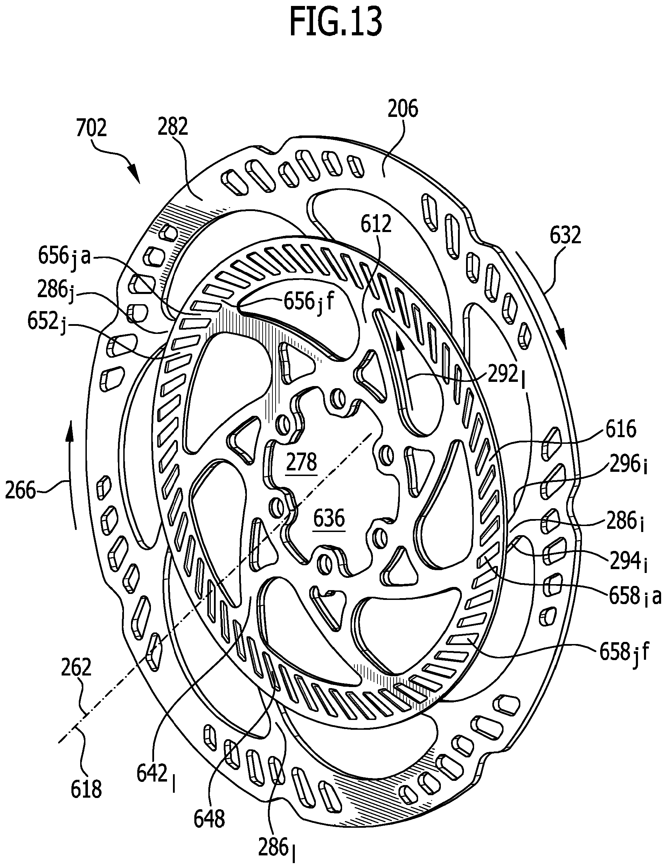

In der Montageposition 702 liegt der Abtastbereich 616 des Sensorkranzes 612 an den Tragestegen 286 der Bremsscheibe 206 an, wie in Fig. 13 bis 17 dargestellt ist, insbesondere stützt sich der Abtastbereich 616 an den Tragestegen 286 ab.

Die Bremsscheibe 206 und der Sensorkranz 612 werden in der Montageposition 702 an die Nabe 102 montiert, wobei beispielsweise die Bremsscheibe 206 eine Montierkennzeichnung 712 und der Sensorkranz 612 eine Montierkennzeichnung 714 zur Kennzeichnung der Relativpositionen der beiden zueinander in der Montageposition 702 aufweisen, wobei die Montierkennzeichnungen 714 und 712 in dem Ausführungsbeispiel als zahnähnlicher Vorsprung ausgebildet sind.

Die Bremsscheibe 206 und der Sensorkranz 612 sind derart ausgebildet, dass in der Montageposition 702 jeder der Tragestege 286 der Bremsscheibe 206 eine bestimmbare Anzahl an Durchbrüchen 658 vollständig abdeckt, bei dem Ausführungsbeispiel deckt jeder der Tragestege 286 jeweils einen der Durchbrüche 658 vollständig ab.

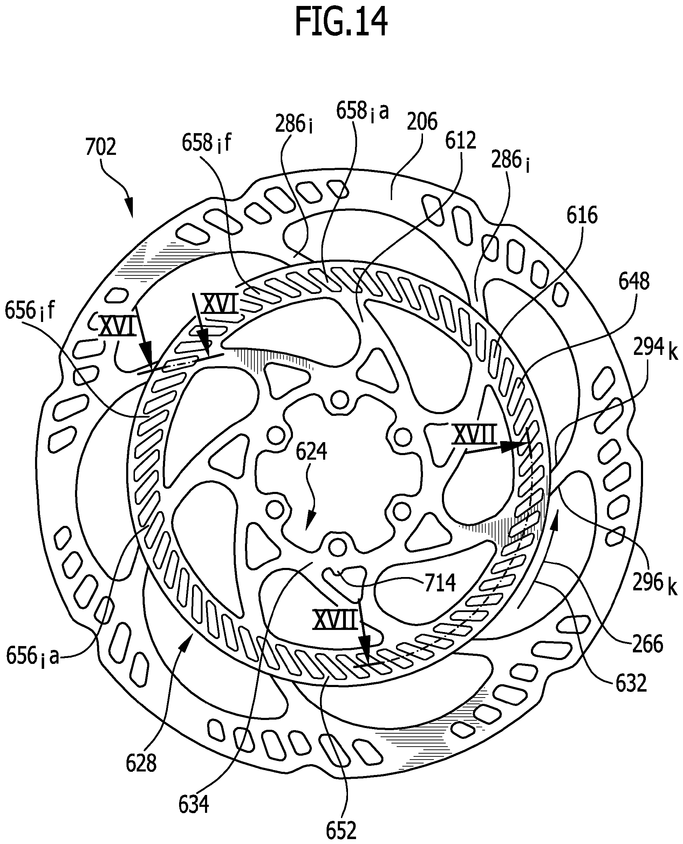

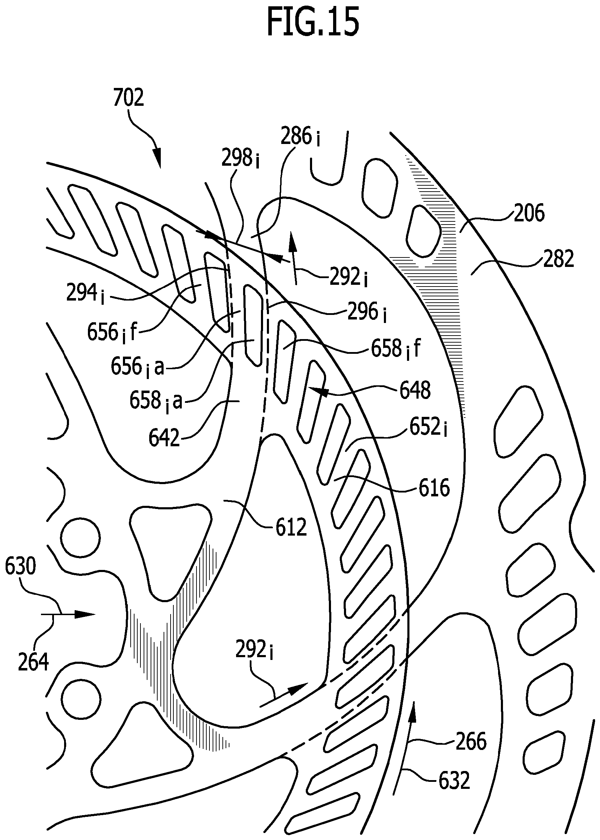

Damit liegt jeder der ersten Ränder 294 eines jeden der Tragestege 286 an einer der Materialbrücken 656 des Sensorkranzes 612 an und ebenso liegt ein jeder der zweiten Ränder 296 eines jeden der Tragestege 286 an einer der Materialbrücken 656 des Sensorkranzes 612 an, wie in Fig. 14 und 15 dargestellt ist.

Damit verläuft jeder der Ränder 294 und 296 eines jeden der Tragestege 286 derart, dass in der Montageposition 702 in dem Abtastbereich 616 die Ränder 294 und 296 jeweils von einer der Materialbrücken 656 abgedeckt werden.

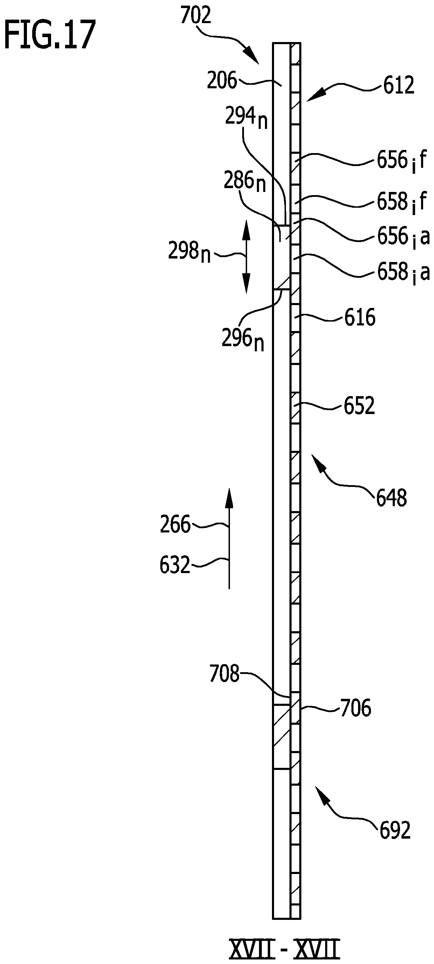

Damit ergibt sich umfangseitig, also entlang der Umlaufrichtung 116, wie bei dem Schnitt XVII-XVII, der in Fig. 14 eingezeichnet und in Fig. 17 dargestellt ist, eine periodisch variierend unterschiedlich stark magnetfeldbeeinflussende Struktur durch die regelmäßige, periodische Abfolge einer bestimmbaren Anzahl an freiliegenden Durchbrüchen 658f, bei dem Ausführungsbeispiel von sieben freiliegenden Durchbrüchen 658f, und darauffolgend eine bestimmbare Anzahl an abgedeckten Durchbrüchen 658a, bei dem Ausführungsbeispiel ein abgedeckter Durchbruch 658a.

Dabei sind in den Figuren nur einige der abgedeckten und freiliegenden Durchbrüche 658ᵢa, ... und 658ᵢf, ... der abgedeckten und freiliegenden Durchbrüche 658a und 658f gekennzeichnet.

Der Sensor 614 ist in der Montageposition 702 von dem Abtastbereich 616 des Sensorkranzes 612 nicht weiter als die Reichweite 682 des Sensors 614 entfernt und somit detektiert der Sensor 614 die magnetfeldbeeinflussende Wirkung eines Teilbereiches des Abtastbereiches 616, der in dem Detektierungsbereich 686 des Sensors 614 liegt und bei einer Drehung des Abtastbereiches 616 mit dem Rad 74 der Radeinheit 12 um die Drehachse 114 ist die magnetfeldbeeinflussende Wirkung des Teilbereiches des Abtastbereiches 616, welcher in dem Detektierungsbereich 686 des Sensors 614 liegt aufgrund der periodisch variierend unterschiedlich starken magnetfeldbeeinflussenden Struktur in dem Abtastbereich 616 zeitlich periodisch unterschiedlich, wobei die zeitliche Periodizität von der Drehgeschwindigkeit des Abtastbereiches 616 und somit von der Drehgeschwindigkeit des Rades 74 abhängt und somit ermittelt der Sensor 614 die Drehgeschwindigkeit des Rades 74.

Hierzu bedarf der Sensor 614 eines eindeutigen Signals, welches durch eine eindeutige Struktur in dem Abtastbereich 616 bewirkt wird und welche nicht durch die an den Sensorkranz 612 anliegende Bremsscheibe 206 beeinflusst werden darf.

Bei der erfindungsgemäßen Anordnung wird eine störende Beeinflussung des Sensors 614 durch die Bremsscheibe 206 aufgrund folgender Verhältnisse vermieden.

Jede der Materialbrücken 656 beeinflusst ein ihren Bereich durchdringendes Magnetfeld in erheblicher Weise, da der Abtastbereich 616 des Sensorkranzes 612 aus einem magnetisch beeinflussenden Material gebildet ist. Dabei ist die Beeinflussung des Magnetfelds durch eine der Materialbrücken 656 derartig ausgeprägt, dass der Sensor 614, welcher in dem Sensorbereich 692 angeordnet ist, einen der Ränder 294, 296 eines der Tragestege 286, welcher an der Materialbrücke 656 anliegt, nicht oder höchstens unerheblich schwach detektiert.

Somit registriert der Sensor 614 bei abgedeckten Materialbrücken 656a an denen einer der Ränder 294, 296 eines der Tragestege 286 anliegt das im Wesentlichen gleiche Signal, wie bei freiliegenden Materialbrücken 656f, an welche keiner der Tragestege 286 und auch keiner der Ränder 294, 296 anliegt.

Dabei sind in den Figuren nur einige abgedeckte und freiliegende Materialbrücken 656ᵢa, ... und 656ᵢf, ... der abgedeckten und freiliegenden Materialbrücken 656a und 656f gekennzeichnet.

Einer der freiliegenden Durchbrüche 658f beeinflusst ein seinen Bereich durchdringendes Magnetfeld in einer eindeutig definierten Weise und einer der abgedeckten Durchbrüche 658a beeinflusst ein seinen Bereich durchdringendes Magnetfeld ebenso in einer eindeutig definierten Weise, wobei die Weise wie einer der freiliegenden Durchbrüche 658f und einer der abgedeckten Durchbrüche 658a ein ihren Bereich durchdringendes Magnetfeld beeinflussen unterschiedlich stark ausfallen kann.

Hingegen beeinflusst einer der Durchbrüche 658, an welchen einer der Ränder 294, 296 eines der Tragestege 286 anliegen würde, ein seinen Bereich durchdringendes Magnetfeld in einer nicht eindeutig definierten, verrauschten Weise. Damit erfasst der Sensor 614 nur von den freiliegenden Durchbrüchen 658f und den abgedeckten Durchbrüchen 658a ein eindeutiges Signal.

Da bei dem Ausführungsbeispiel die Abfolge von Materialbrücken 656, freiliegenden Durchbrüchen 658f und abgedeckten Durchbrüchen 658a genau festgelegt ist und an keinem der Durchbrüche 658 einer der Ränder 294, 296 eines der Tragestege 286 anliegt, erhält der Sensor 614 ein Signal, welches gut zur Bestimmung der Drehgeschwindigkeit des Rades 74 verarbeitbar ist.

Das Antiblockiersystem 18 umfasst eine Steuerungseinheit 804, welche mit den Sensoreinheiten 78v und 78h der vorderen und hinteren Radeinheiten 12v und 12h signalübertragend verbunden ist, und eine Druckregulierungseinheit 806, welche mit dem Hydrauliksystem 208v der vorderen Radeinheit 12v, und bei einer Variante in analoger Weise mit dem Hydrauliksystem 208h der hinteren Radeinheit 12h, den Druck in dem Hydrauliksystem 208 regulierbar verbunden ist, wobei die Steuerungseinheit 804 die Druckregulierungseinheit 806 in Abhängigkeit der gemessenen Drehgeschwindigkeiten des Vorderrades 74v und des Hinterrades 74h, welche von den Sensoreinheiten 78 ermittelt werden und an die Steuerungseinheit 806 übermittelt werden, steuert.

Die Steuerungseinheit 804 des Antiblockiersystems 18 ermittelt aus den von den Sensoreinheiten 78v und 78h übertragenen Drehgeschwindigkeiten der Räder 74v und 74h die Differenz der beiden Drehgeschwindigkeiten der Räder 74 und ermittelt daraus, beispielsweise bei einer zu großen Abweichung der beiden Drehgeschwindigkeiten relativ zueinander, ob eines der Räder 74 blockiert ist, also seine Drehgeschwindigkeit, verglichen mit der Drehgeschwindigkeit des anderen Rades 74, erheblich kleiner ist, wobei die Blockierung durch eine starke Betätigung der Betätigungseinheit 202 der Bremsvorrichtung 76 und eine daraus resultierende starke Bremseinwirkung der Bremszange 204 auf die Bremsscheibe 206 und somit auf das Rad 74 hervorgerufen ist.

Hierfür ist die Steuerungseinheit 804 beispielsweise mit elektrisch leitfähigen Kabeln mit den Sensoreinheiten 78v und 78h verbunden und die Sensoreinheiten 78 übermitteln die Drehgeschwindigkeiten der Räder 74 in Form von elektrischen Impulsen.

Ebenso ist die Steuerungseinheit 804 beispielsweise mit einem elektrisch leitfähigen Kabel mit der Druckregulierungseinheit 806 verbunden und übermittelt Steuerungsbefehle für die Druckregulierungseinheit 806 in Form von elektrischen Impulsen entlang des Kabels.

Hat die Steuerungseinheit 804 ein Blockieren des Rades 74 ermittelt, steuert sie die Druckregulierungseinheit 806 an, worauf die Druckregulierungseinheit 806 den Druck in dem Hydrauliksystem 208 der Bremsvorrichtung 76 vermindert, beispielsweise dadurch, dass die Druckregulierungseinheit 806 Hydraulikflüssigkeit aus dem Hydrauliksystem 208 teilweise in einen Zwischenspeicher umleitet.

Durch die Druckverminderung in dem Hydrauliksystem 208, welche von der Druckregulierungseinheit 806 veranlasst ist, beaufschlagen die Kolben 246 und 248 die Bremsbeläge 242 und 244 weniger stark und folglich pressen die Bremsbeläge 242 und 244 weniger stark auf die Bremsscheibe 206, so dass die Reibung an denselben nachlässt und die Blockierung des Rades 74 gelöst wird und das Rad 74 wieder rollt.

Das Fahrradantriebsystem 16 umfasst einen Zahnkranz 848, welcher an das Nabengehäuse 122h der hinteren Radeinheit 12h angeordnet ist, ein Kettenblatt 852 und eine Kette 854, welche beweglich zwischen dem Zahnkranz 848 und dem Kettenblatt 852 gespannt ist, so dass eine Drehbewegung von dem Kettenblatt 852 durch die Kette 854 auf den Zahnkranz 848 übertragen wird, sowie Pedale 856 und 858, wie in Fig. 1 dargestellt ist.

Dabei ist das Kettenblatt 852 drehbar beweglich an den Rahmen 14 angeordnet und die Pedale 856 und 858 sind mit dem Kettenblatt 852 verbunden, so dass der Fahrer, der auf die Pedale 856 und 858 tritt und somit das Kettenblatt 852 in eine Drehbewegung bringt, das Hinterrad 74h zu einer Drehbewegung antreibt, dadurch dass die von dem Fahrer bewirkte Drehbewegung des Kettenblatts 852 über die Kette 854 auf den Zahnkranz 848 und somit auf Nabengehäuse 122h übertragen wird.

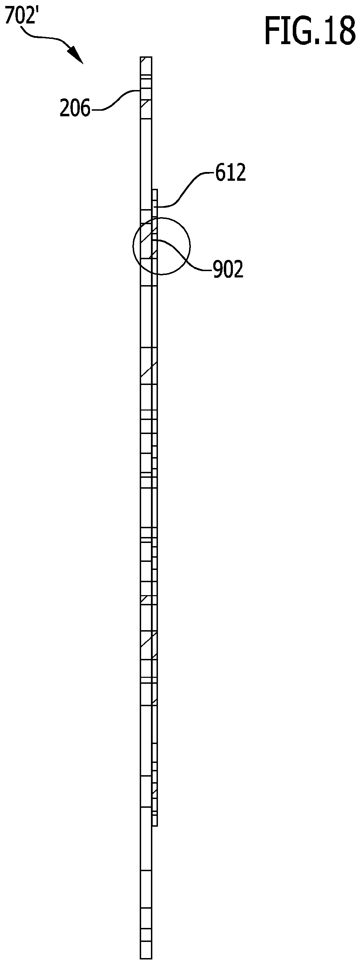

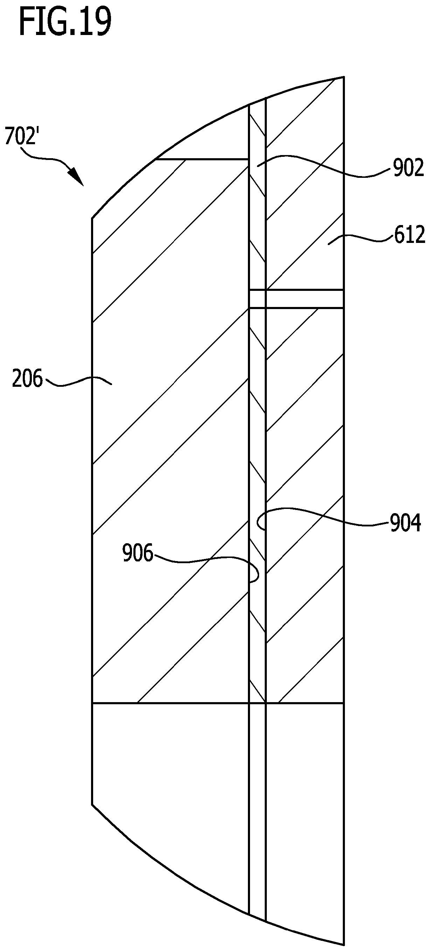

Bei einem zweiten Ausführungsbeispiel einer erfindungsgemäßen Montageposition 702', dargestellt in den Fig. 18 und 19, sind diejenigen Teile, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Bei dem zweiten Ausführungsbeispiel ist zwischen der Bremsscheibe 206 und dem Sensorkranz 612 eine Zwischenlage 902 vorgesehen, welche mit einer ersten Seite 904 an dem Sensorkranz 612 anliegt und mit einer zweiten Seite 906 an der Bremsscheibe 206 anliegt, so dass der Sensorkranz 612 in der Montageposition 702' anliegend an der Bremsscheibe 206 angeordnet ist und der Sensorkranz 612 sich insbesondere an der Bremsscheibe 206 abstützt.

Im Übrigen sind alle weiteren Teile mit denen von dem ersten Ausführungsbeispiel identisch, so dass auf die Ausführungen im Zusammenhang mit diesem Ausführungsbeispiel vollinhaltlich verwiesen wird.

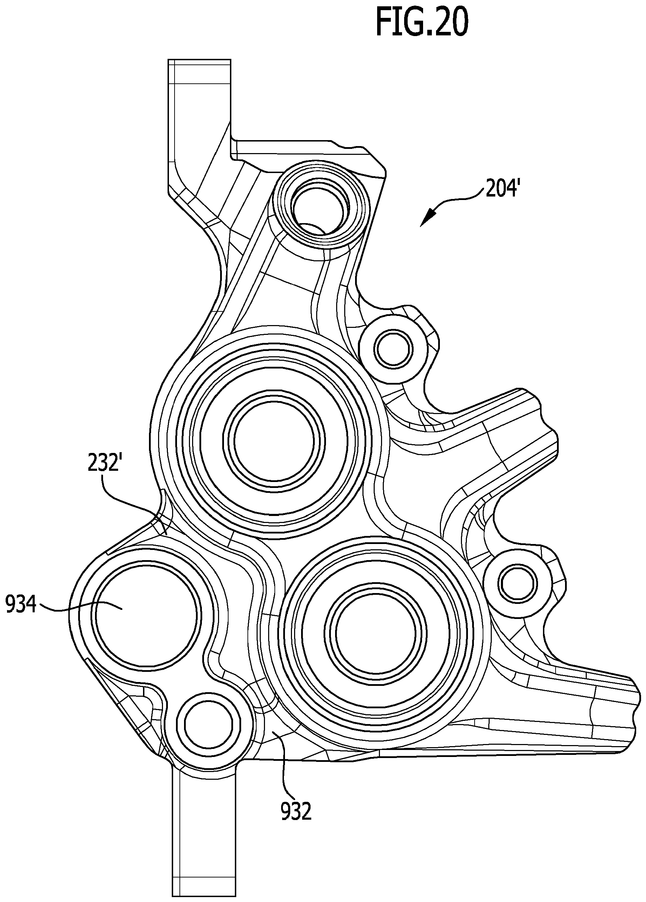

Bei einem dritten Ausführungsbeispiel der erfindungsgemäßen Lösung, dargestellt in Fig. 20, sind diejenigen Teile, die mit denen eines der voranstehenden Ausführungsbeispiele identisch sind, mit denselben Bezugszeichen versehen, so dass bezüglich der Beschreibung derselben vollinhaltlich auf die Ausführungen zu den voranstehenden Ausführungsbeispielen verwiesen werden kann.

Bei dem dritten Ausführungsbeispiel ist der Sensor 614' der Sensoreinheit 602 in dem Bremszangengehäuse 232' der Bremszange 204' angeordnet.

Dabei ist in dem Bremszangengehäuse 232', welches in Fig. 20 ohne den angeordneten Sensor 614' und ohne weitere Bauteile dargestellt ist, eine Umfassung 932 angeformt, welche eine Einfassung 934 umfasst, in welche der Sensor 614 montierbar ist.

Dabei ist die Einfassung 934 im Wesentlichen mit einem Abstand von den Bremsbelägen 242 und 244 beabstandet, der dem Abstand des Abtastbereichs 616 von dem Bremsring 282 entspricht, so dass die Bremsbeläge 242 und 244 mit dem Bremsring 282 zusammenwirkbar angeordnet sind und der Sensor 614' auf den Abtastbereich 616 ausgerichtet ist.

Im Übrigen sind alle weiteren Teile mit denen eines der voranstehenden Ausführungsbeispiele identisch, so dass auf die Ausführungen im Zusammenhang mit diesen Ausführungsbeispielen vollinhaltlich verwiesen werden kann.

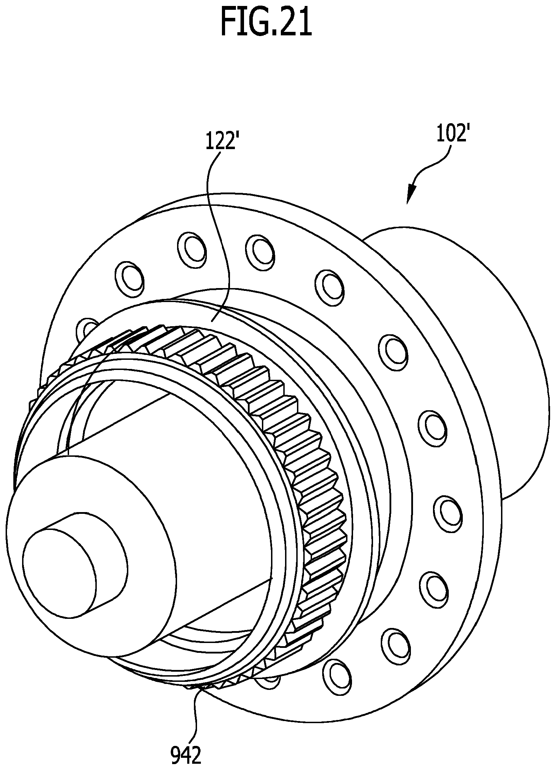

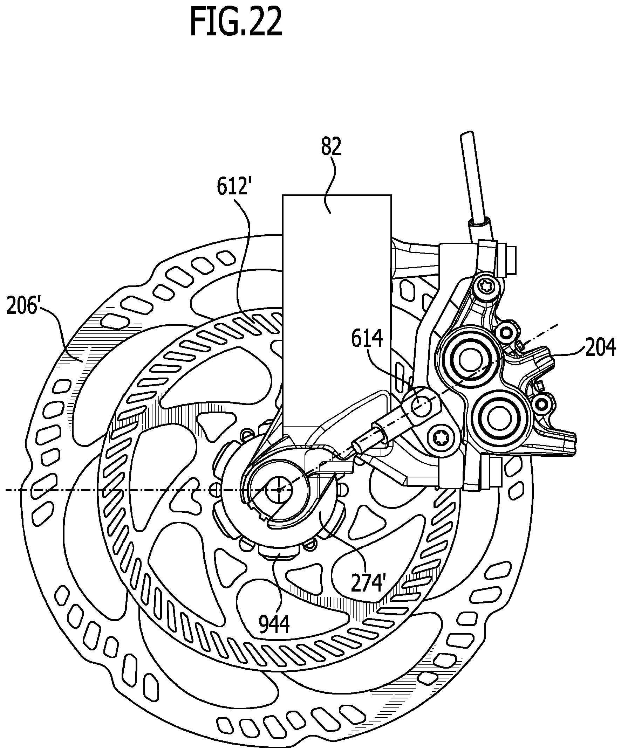

Bei einem vierten Ausführungsbeispiel einer erfindungsgemäßen Lösung, dargestellt in den Fig. 21 bis 22, sind diejenigen Teile, die mit denen eines der voranstehenden Ausführungsbeispiele identisch sind, mit denselben Bezugszeichen versehen, so dass bezüglich der Beschreibung derselben vollinhaltlich auf die Ausführungen im Zusammenhang mit den voranstehenden Ausführungsbeispielen verwiesen werden kann.

Bei dem vierten Ausführungsbeispiel umfasst ein Nabengehäuse 122' der Nabe 102' einen gezahnten Ring 942 zur Montage der Bremsscheibe 206' und des Sensorkranzes 612'.

Dabei umfasst ein Befestigungselement 274' einen Aufnahmebereich 944 für den gezahnten Ring 942 und die Bremsscheibe 206' und der Sensorkranz 612' sind so mit dem Befestigungselement 274' an die Nabe 102' montierbar.

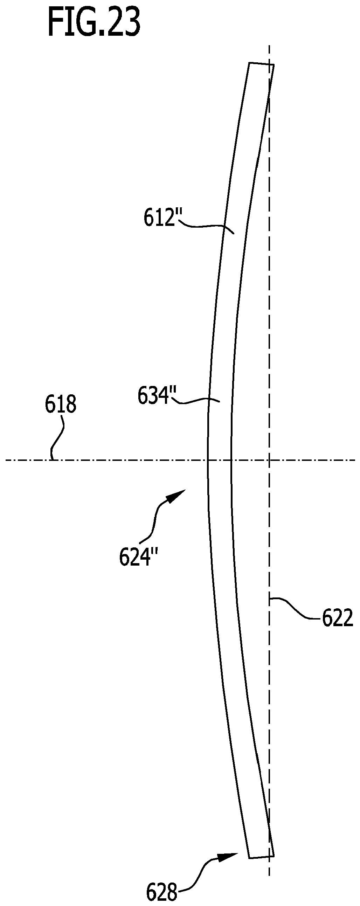

Bei einem fünften Ausführungsbeispiel einer erfindungsgemäßen Lösung, dargestellt in Fig. 23 als ein schematischer radialer Schnitt durch einen erfindungsgemäßen Sensorkranz 612", sind diejenigen Teile, die mit denen eines der voranstehenden Ausführungsbeispiele identisch sind, mit denselben Bezugszeichen versehen, so dass bezüglich der Beschreibung derselben vollinhaltlich auf die Ausführungen im Zusammenhang mit den voranstehenden Ausführungsbeispielen verwiesen werden kann.

Bei dem fünften Ausführungsbeispiel ist der Sensorkranz 612" im Wesentlichen tellerförmig ausgebildet, d.h. dass der Sensorkranz 612" ausgehend von der Sensorkranzachse 618 in der zu der Sensorkranzachse 618 radialen Richtung gebogen ist.

Dabei definiert der Sensorkranz 612" in seinem Außenbereich 628, insbesondere in dem Abtastbereich 616", die Sensorkranzebene 622 und der Innenbereich 624", insbesondere der Montagering 634", ist in zu der Sensorkranzachse 618 axialen Richtung von der Sensorkranzebene 622 beabstandet.

Damit wird der Sensorkranz 612" unter Vorspannung an die Nabe 102 und kraftbeaufschlagt an die Bremsscheibe 206 anliegend angeordnet, so dass in dem montierten Zustand der Innenbereich 624" und der Außenbereich 628 des Sensorkranzes 612" im Wesentlichen in der Sensorkranzebene 622 verlaufen.

Dabei stützt sich der Abtastbereich 616" an den Tragestegen 286 der Bremsscheibe 206 ab.

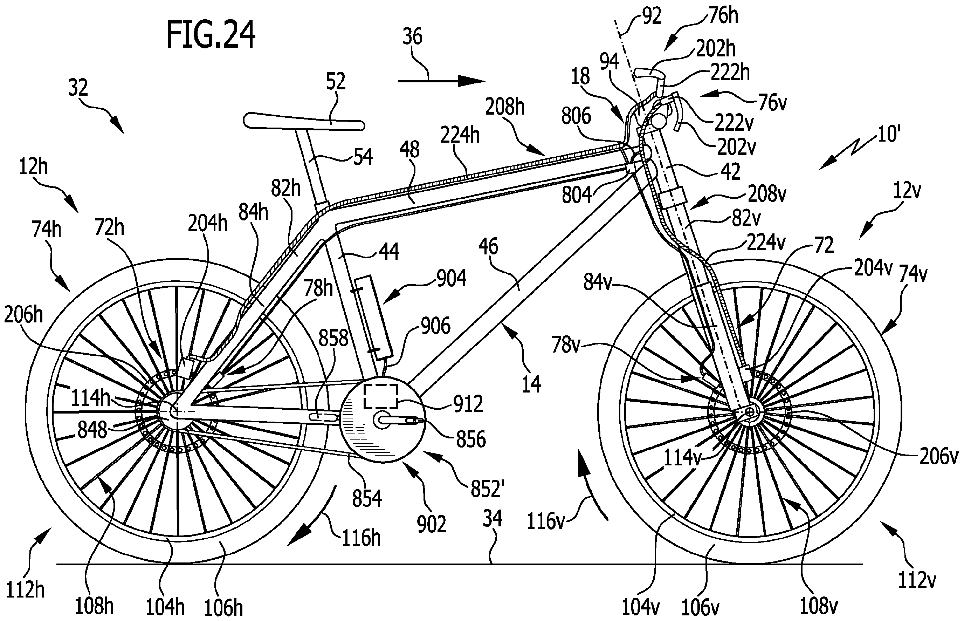

Bei einem sechsten Ausführungsbeispiel einer erfindungsgemäßen Lösung, dargestellt in Fig. 24, sind diejenigen Teile, die mit denen eines der voranstehenden Ausführungsbeispiele identisch sind, mit denselben Bezugszeichen versehen, so dass bezüglich der Beschreibung derselben vollinhaltlich auf die Ausführungen im Zusammenhang mit den voranstehenden Ausführungsbeispielen verwiesen werden kann.

Bei dem sechsten Ausführungsbeispiel umfasst das erfindungsgemäße Fahrrad 10' einen Zusatzantrieb 902, welcher aus einer Energiequelle 904 über ein Energieübertragungselement 906 mit Energie versorgt wird.

Bei dem Ausführungsbeispiel ist die Energiequelle 904 ein Akkumulator, also ein wiederaufladbarer Speicher für elektrische Energie, und der Zusatzantrieb 902 wird über das als Kabel ausgebildete Energieübertragungselement 906 mit elektrischem Strom versorgt.

Bei einer Variante ist vorgesehen, dass die Energiequelle 904 eine Brennstoffzelle umfasst, welche elektrischen Strom erzeugt und mit diesem den Zusatzantrieb 902 versorgt.

Bei einer weiteren Variante umfasst die Energiequelle 904 eine Solarzelle, welche elektrischen Strom erzeugt und mit diesem den Zusatzantrieb 902 versorgt.

Der Zusatzantrieb 902 umfasst einen elektrischen Antriebsmotor 912 und ein Kettenblatt 852' ist in den Zusatzantrieb 902 integriert und beispielsweise über eine erste Welle drehbar beweglich mit dem elektrischen Antriebsmotor 912 verbunden und mit einer zweiten Welle drehbar beweglich mit den Pedalen 856 und 858 verbunden, so dass der elektrische Antriebsmotor 912 über die erste Welle das Kettenblatt 852' in eine Drehbewegung versetzt, und somit über die Kette 854 den Zahnkranz 848 in eine Drehbewegung versetzt und somit das Hinterrad 74h antreibt und in analoger Weise kann der Fahrer des Fahrrades 10' über die Pedale 856 und 858 das Kettenblatt 852' über die zweite Welle in eine Drehbewegung versetzen und somit ebenso das Hinterrad 74h antreiben.

Im Übrigen sind alle weiteren Teile mit denen von einem der voranstehenden Ausführungsbeispiele identisch, so dass auf die Ausführungen im Zusammenhang mit den voranstehenden Ausführungsbeispielen vollinhaltlich verwiesen werden kann.

## Patentansprüche

1. Fahrrad (10) umfassend eine vordere Radeinheit (12v) und eine hintere Radeinheit (12h), welche durch einen Rahmen (14) miteinander verbunden sind, wobei jede der Radeinheiten (12v, 12h) eine Nabe (102) und eine um eine Drehachse (114) drehbar beweglich angeordnete Felge (104), welche durch Speichen (108) miteinander verbunden sind, umfasst,
wobei an der Nabe (102) zumindest einer der Radeinheiten (12v, 12h) eine Bremsscheibe (206) und ein Sensorkranz (612) mit einem Abtastbereich (616) angeordnet sind und dass die zumindest eine Radeinheit einen Sensor (614) zum Detektieren des Abtastbereiches und eine Bremszange (204), welche mit der Bremsscheibe (206) bremsend zusammenwirkt, umfasst und **dadurch gekennzeichnet, dass** die Bremszange (204) eine Einfassung (934) umfasst, in welcher der Sensor (614) angeordnet ist.

2. Fahrrad (10) nach Anspruch 1, **dadurch gekennzeichnet, dass** dieses ein Antiblockiersystem (18) umfasst, wobei das Antiblockiersystem (18) eine Steuerungseinheit (804) und eine Druckregulierungseinheit (806) umfasst, und Sensoren (614) der vorderen Radeinheit (12v) und der hinteren Radeinheit (12h) die Drehgeschwindigkeiten des Rades der vorderen Radeinheit (12v) und des Rades der hinteren Radeinheit (12h) an die Steuerungseinheit (804) übermitteln und die Druckregulierungseinheit (806) mit einem Hydrauliksystem (208) einer die Bremsscheibe (206) und die Bremszange (204) umfassenden Bremsvorrichtung (76) der vorderen Radeinheit (12v) verbunden ist, wobei die Steuerungseinheit (804) die Druckregulierungseinheit (806) in Abhängigkeit der ermittelten Drehgeschwindigkeiten des vorderen und des hinteren Rades ansteuert und bei einem Blockieren eines der Räder die Steuerungseinheit (804) die Druckregulierungseinheit (806) ansteuert, so dass die Druckregulierungseinheit (806) in dem Hydrauliksystem (208) den Druck vermindert, und somit die Bremszange (204) und die Bremsscheibe (206) weniger stark bremsend zusammenwirken und die Blockierung des Rades aufgehoben wird.

3. Fahrrad (10) nach Anspruch 2, **dadurch gekennzeichnet, dass** die Druckregulierungseinheit (806) mit einem Hydrauliksystem (208) einer die Bremsscheibe (206) und die Bremszange (204) umfassenden Bremsvorrichtung der hinteren Radeinheit (12h) verbunden ist.

4. Fahrrad (10) nach Anspruch 2 oder 3, **dadurch gekennzeichnet, dass** wenn eines der Räder eine erheblich geringere Drehgeschwindigkeit bezogen auf die Drehgeschwindigkeit des anderen Rades bei einem Bremsvorgang aufweist, die Steuerungseinheit (804) die Druckregulierungseinheit (806) ansteuert.

5. Fahrrad (10) nach einem der voranstehenden Ansprüche, **dadurch gekennzeichnet, dass** bei zumindest einer der Radeinheiten (12v, 12h) sich der Sensorkranz (612) an der Bremsscheibe (206) abstützt.

6. Fahrrad (10) nach einem der voranstehenden Ansprüche, **dadurch gekennzeichnet, dass** bei zumindest einer der Radeinheiten (12v, 12h) der Sensorkranz (612) unmittelbar an der Bremsscheibe (206) anliegt.

7. Fahrrad (10) nach einem der voranstehenden Ansprüche, **dadurch gekennzeichnet, dass** bei zumindest einer der Radeinheiten (12v, 12h) zwischen dem Sensorkranz (612) und der Bremsscheibe (206) eine Zwischenlage (902) angeordnet ist.

8. Fahrrad (10) nach einem der voranstehenden Ansprüche, **dadurch gekennzeichnet, dass** bei zumindest einer der Radeinheiten (12v, 12h) die Bremsscheibe (206) mehrere Tragestege (286) umfasst, die einen Bremsring (282) tragen, dass insbesondere N Tragestege (286) an der Bremsscheibe (206) angeordnet sind und die Anordnung der Tragestege (286) bezüglich einer Drehung um eine Bremsscheibenachse (262) mit einem Winkel 360°/N drehsymmetrisch ist.

9. Fahrrad (10) nach einem der voranstehenden Ansprüche, **dadurch gekennzeichnet, dass** bei zumindest einer der Radeinheiten (12v, 12h) sich der Sensorkranz (612) im Wesentlichen in einer Sensorkranzebene (622), welche senkrecht zu einer Sensorkranzachse (618) verläuft, erstreckt, dass insbesondere in einem unverbauten Zustand ein Innenbereich (624) des Sensorkranzes (612) von der Sensorkranzebene (622), welche dabei durch einen Außenbereich (628) des Sensorkranzes (612) definiert wird, beabstandet ist.

10. Fahrrad (10) nach einem der voranstehenden Ansprüche, **dadurch gekennzeichnet, dass** bei zumindest einer der Radeinheiten (12v, 12h) der Außenbereich (628) des Sensorkranzes (612) kraftbeaufschlagt an der Bremsscheibe (206) anliegend angeordnet ist.

11. Fahrrad (10) nach einem der voranstehenden Ansprüche, **dadurch gekennzeichnet, dass** bei zumindest einer der Radeinheiten (12v, 12h) der Abtastbereich (616) an den Tragestegen (286) anliegend angeordnet ist, dass insbesondere der Abtastbereich (616) sich an den Tragestegen (286) der Bremsscheibe (206) abstützt.

12. Fahrrad (10) nach einem der voranstehenden Ansprüche, **dadurch gekennzeichnet, dass** bei zumindest einer der Radeinheiten (12v, 12h) der Abtastbereich (616) eine entlang der Umlaufrichtung (632) um die Sensorkranzachse (618) periodisch variierende Struktur (648) aufweist, dass insbesondere die periodisch variierende Struktur (648) in dem Abtastbereich (616) bezüglich einer Drehung um die Sensorkranzachse (618) mit einem Winkel 360°/kN drehsymmetrisch ist, wobei kN der Anzahl N der Tragestege (286) der Bremsscheibe (206) oder einem ganzzahligen Vielfachen davon entspricht.

13. Fahrrad (10) nach einem der voranstehenden Ansprüche, **dadurch gekennzeichnet, dass** bei zumindest einer der Radeinheiten (12v, 12h) die periodisch variierende Struktur (648) entlang der Umlaufrichtung um die Sensorkranzachse (618) periodisch variierend unterschiedlich stark magnetfeldbeeinflussend ausgebildet ist.

14. Fahrrad (10) nach einem der voranstehenden Ansprüche, **dadurch gekennzeichnet, dass** bei zumindest einer der Radeinheiten (12v, 12h) die periodisch variierende Struktur (648) durch regelmäßig abwechselnd angeordnete Durchbrüche (658) und Materialbrücken (656) ausgebildet ist, dass insbesondere die Durchbrüche (658) sich länglich in eine zu der Sensorkranzachse (618) radialen Richtung (630) erstrecken, dass insbesondere in dem Abtastbereich (616) mN Durchbrüche (658) und mN Materialbrücken (656) angeordnet sind, wobei mN der Anzahl N der Tragestege (286) der Bremsscheibe (206) oder einem ganzzahligen Vielfachen davon entspricht.

15. Fahrrad (10) nach einem der voranstehenden Ansprüche, **dadurch gekennzeichnet, dass** bei zumindest einer der Radeinheiten (12v, 12h) die Durchbrüche (658) und die Materialbrücken (656) bezüglich einer Drehung um die Sensorkranzachse (618) mit einem Winkel 360°/IN drehsymmetrisch angeordnet sind, wobei IN der Anzahl N der Tragestege (286) der Bremsscheibe (206) oder einem ganzzahligen Vielfachen davon entspricht, dass insbesondere die Durchbrüche (658) und die Materialbrücken (656) zwischen den Tragestegen (286) der Bremsscheibe (206) entlang der Umlaufrichtung (116) um die Drehachse (114) periodisch angeordnet sind, dass insbesondere eine Breite der Durchbrüche (658) quer zu der zu der Sensorkranzachse (618) radialen Richtung kleiner ist als eine Breite der Tragestege (286) der Bremsscheibe (206) quer zu der zu der Bremsscheibenachse (252) radialen Richtung, dass insbesondere ein jeder Rand (294, 296) eines jeden der Tragestege (286) an einem ein Magnetfeld stark beeinflussenden Bereich des Abtastbereiches (616) angeordnet ist, dass insbesondere ein Rand (294, 296) eines jeden der Tragestege (286) von einer der Materialbrücken (656) im Abtastbereich (616) abgedeckt wird.

16. Fahrrad (10) nach einem der voranstehenden Ansprüche, **dadurch gekennzeichnet, dass** bei zumindest einer der Radeinheiten (12v, 12h) die Tragestege (286) der Bremsscheibe (206) periodisch entlang der Umlaufrichtung (632) um die Drehachse (114) zu der periodisch variierenden Struktur (648) des Abtastbereiches (616) angeordnet sind, dass insbesondere jeder der Tragestege (286) mindestens einen der Durchbrüche (658) vollständig abdeckt, dass insbesondere jeder der Durchbrüche (658) entweder vollständig von einem Tragesteg (286) abgedeckt ist oder freiliegend ist, dass insbesondere die abgedeckten Durchbrüche (658a) und die freiliegenden Durchbrüche (658f) entlang der Umlaufrichtung (612) um die Sensorkranzachse (618) in periodischer Weise angeordnet sind.

17. Fahrrad (10) nach einem der voranstehenden Ansprüche, **dadurch gekennzeichnet, dass** bei zumindest einer der Radeinheiten (12v, 12h) Haltestege (642) den Abtastbereich (616) an einem Montagering (634) halten, dass insbesondere der Sensorkranz (612) und die Bremsscheibe (206) derart an die Nabe (102) angeordnet sind, dass die Tragestege (286) der Bremsscheibe (206) und die Haltestege (642) des Sensorkranzes (612) sich in einer zu der Drehachse (114) axialen Richtung abdecken.

## Claims

1. A bicycle (10) comprising a front wheel unit (12v) and a rear wheel unit (12h), which are connected to one another by a frame (14), wherein each of the wheel units (12v, 12h) comprises a hub (102) and a wheel rim (104), which is arranged rotatably about an axis of rotation (114), wherein the hub and the wheel rim are connected to one another by spokes (108),
wherein a brake disk (206) and sensor ring (612) having a sensing region (161) are arranged on the hub (102) of at least one of the wheel units (12v, 12h) and in that the at least one wheel unit comprises a sensor (614) for detecting the sensing region and a brake caliper (204), which cooperates with the brake disk (206) in a braking manner, and **characterised in that** the brake caliper (204) comprises a casing (934), in which the sensor (614) is arranged.

2. A bicycle (10) according to Claim 1, **characterised in that** it comprises an anti-lock braking system (18), wherein the anti-lock braking system (18) comprises a control unit (804) and a pressure regulation unit (806), and sensors (614) of the front wheel unit (12v) and the rear wheel unit (12h) transmit the rotation speeds of the wheel of the front wheel unit (12v) and the wheel of the rear wheel unit (12h) to the control unit (804), and the pressure regulation unit (806) is connected to a hydraulics system (208) of a brake device (76) of the front wheel unit (12v), the brake device comprising the brake disk (206) and the brake caliper (204), wherein the control unit (804) controls the pressure regulation unit (806) depending on the determined rotational speeds of the front and rear wheels and when one of the wheels is locked the control unit (804) actuates the pressure regulation unit (806) such that the pressure regulation unit (806) reduces the pressure in the hydraulics system (208) and thus the brake caliper (204) and the brake disk (206) cooperate in a braking manner to a lesser extent and the locking of the wheel is overridden.

3. A bicycle (10) according to Claim 2, **characterised in that** the pressure regulation unit (806) is connected to a hydraulics system (208) of a brake device of the rear wheel unit (12h), the brake device comprising the brake disc (206) and the brake calliper (204).

4. A bicycle (10) according to Claim 2 or 3, **characterised in that** when one of the wheels has a significantly lower rotation speed with reference to the rotation speed of the other wheel in a braking procedure, the control unit (804) actuates the pressure regulation unit (806).

5. A bicycle (10) according to any one of the preceding Claims **characterised in that** in at least one of the wheel units (12v, 12h), the sensor ring (612) is supported on the brake disk (206).

6. A bicycle (10) according to any one of the preceding Claims **characterised in that** in at least one of wheel units (12v, 12h) the sensor ring (612) abuts directly against the brake disk (206).

7. A bicycle (10) according to any one of the preceding Claims **characterised in that** in at least one of the wheel units (12v, 12h) an intermediate layer (902) is arranged between the sensor ring (612) and the brake disk (206).

8. A bicycle (10) according to any one of the preceding Claims **characterised in that** in at least one of the wheel units (12v, 12h) the brake disk (206) comprises a plurality of supporting bars (286), which support a brake ring (282), **in that** in particular N supporting bars (286) are arranged on the brake disc (206) and the arrangement of the supporting bars (286) is rotationally symmetrical with respect to a rotation about a brake disc axis (262) with an angle of 360°/N.

9. A bicycle (10) according to any one of the preceding Claims **characterised in that** in at least one of the wheel units (12v, 12h) the sensor ring (612) extends substantially in a sensor ring plane (622) running perpendicularly to a sensor ring axis (618), **in that** in particular in an unassembled state, an inner region (624) of the sensor ring (612) is spaced from the sensor ring plane (622), which is defined here by an outer region (628) of the sensor ring (612).

10. A bicycle (10) according to any one of the preceding Claims **characterised in that** in at least one of the wheel units (12v, 12h) the outer region (628) of the sensor ring (612) is arranged abutting against the brake disk (206) under the action of a force.

11. A bicycle (10) according to any one of the preceding Claims **characterised in that** in at least one of the wheel units (12v, 12h) the sensing region (616) is arranged abutting against the supporting bars (286), **in that** in particular the sensing region (616) is supported on the supporting bars (286) of the brake disk (206).

12. A bicycle (10) according to any one of the preceding Claims **characterised in that** in at least one of the wheel units (12v, 12h) the sensing region (616) has a structure (648) that varies periodically along the circumferential direction (632) around the sensor ring axis (618), **in that** in particular the periodically varying structure (648) in the sensing region (616) is rotationally symmetrical with respect to a rotation about the sensor ring axis (618) with an angle of 360°/kN, wherein kN corresponds to the number N of the supporting bars (286) of the brake disc (206) or an integer multiple thereof.

13. A bicycle (10) according to any one of the preceding Claims **characterised in that** in at least one of the wheel units (12v, 12h) the periodically varying structure (648) along the circumferential direction around the sensor ring axis (618) is configured to influence a magnetic field to differing degrees in a periodically varying manner.

14. A bicycle (10) according to any one of the preceding Claims **characterised in that** in at least one of the wheel units (12v, 12h) the periodically varying structure (648) is formed by apertures (658) and material bridges (656) arranged in a regularly alternating manner, **in that** in particular the apertures (658) extend in an elongate manner in a direction (630) that is radial relative to the sensor ring axis (618), **in that** in particular mN apertures (658) and mN material bridges (656) are arranged in the sensing region (616), wherein mN corresponds to the number N of supporting bars (286) of the brake disc (206) or an integer multiple thereof.

15. A bicycle (10) according to any one of the preceding Claims **characterised in that** in at least one of the wheel units (12v, 12h) the apertures (658) and the material bridges (656) are arranged rotationally symmetrically with respect to a rotation about the sensor ring axis (618) with an angle of 360°/IN, wherein IN corresponds to the number N of supporting bars (286) of the brake disc (206) or an integer multiple thereof, **in that** in particular the apertures (658) and the material bridges (656) are arranged periodically between the supporting bars (286) of the brake disc (206) along the circumferential direction (116) around the axis of rotation (114), **in that** in particular a width of the apertures (658) transversely to the direction that is radial relative to the sensor ring axis (618) is smaller than a width of the supporting bars (286) of the brake disc (206) transversely to the direction that is radial relative to the brake disc axis (252), **in that** in particular each edge (294, 296) of each of the supporting bars (286) is arranged in an area of the sensing region (616) that heavily influences a magnetic field, **in that** in particular an edge (294, 296) of each of the supporting bars (286) is covered by one of the material bridges (656) in the sensing region (616).

16. A bicycle (10) according to any one of the preceding Claims **characterised in that** in at least one of the wheel units (12v, 12h) the supporting bars (286) of the brake disc (206) are arranged periodically along the circumferential direction (632) around the axis of rotation (114) to form the periodically varying structure (648) of the sensing region (616), **in that** in particular each of the supporting bars (286) fully covers at least one of the apertures (658) **in that** in particular each of the apertures (658) is either fully covered by a supporting bar (286) or is exposed, **in that** in particular the covered apertures (658a) and the exposed apertures (658f) are arranged periodically along the circumferential direction (612) around the sensor ring axis (618).

17. A bicycle (10) according to any one of the preceding Claims **characterised in that** in at least one of the wheel units (12v, 12h) retaining bars (642) hold the sensing region (616) on a mounting ring (634), **in that** in particular the sensor ring (612) and the brake disk (206) are arranged on the hub (102) in such a way that the supporting bars (286) of the brake disk (206) and the retaining bars (642) of the sensor ring (612) cover one another in a direction axial of the axis of rotation (114).

## Revendications

1. Bicyclette (10) comprenant une unité de roue avant (12v) et une unité de roue arrière (12h), lesquelles sont reliées l'une à l'autre par un cadre (14), dans laquelle chacune des unités de roue (12v, 12h) comporte un moyeu (102) et une jante (104) agencée mobile en rotation autour d'un axe de rotation (114), lesquels sont reliés l'un à l'autre par des rayons (108), dans laquelle un disque de frein (206) et une bague capteur (612) avec une zone de balayage (616) sont agencés au niveau du moyeu (102) au moins d'une des unités de roue (12v, 12h) et que l'au moins une unité de roue comporte un capteur (614) pour la détection de la zone de balayage et un étrier de frein (204), lequel coopère par freinage avec le disque de frein (206), et **caractérisée en ce que** l'étrier de frein (204) comporte une bordure (934), dans laquelle le capteur (614) est agencé.

2. Bicyclette (10) selon la revendication 1, **caractérisée en ce que** celle-ci comporte un système antiblocage (18), dans laquelle le système antiblocage (18) comporte une unité de commande (804) et une unité de régulation de pression (806), et des capteurs (614) de l'unité de roue avant (12v) et de l'unité de roue arrière (12h) transmettent les vitesses de rotation de la roue de l'unité de roue avant (12v) et de la roue de l'unité de roue arrière (12h) à l'unité de commande (804) et l'unité de régulation de pression (806) est reliée à un système hydraulique (208) d'un dispositif de freinage (76) comprenant le disque de frein (206) et l'étrier de frein (204) de l'unité de roue avant (12v), dans laquelle l'unité de commande (804) commande l'unité de régulation de pression (806) en fonction des vitesses de rotation calculées de la roue avant et de la roue arrière et en cas de blocage d'une des roues, l'unité de commande (804) commande l'unité de régulation de pression (806) de sorte que l'unité de régulation de pression (806) dans le système hydraulique (208) réduise la pression, et ainsi l'étrier de frein (204) et le disque de frein (206) coopèrent moins fortement par freinage et le blocage de la roue soit suspendu.

3. Bicyclette (10) selon la revendication 2, **caractérisée en ce que** l'unité de régulation de pression (806) est reliée à un système hydraulique (208) d'un dispositif de freinage comprenant le disque de frein (206) et l'étrier de frein (204) de l'unité de roue arrière (12h).

4. Bicyclette (10) selon la revendication 2 ou 3, **caractérisée en ce que** lorsque l'une des roues présente une vitesse de rotation considérablement plus faible par rapport à la vitesse de rotation de l'autre roue en cas de processus de freinage, l'unité de commande (804) commande l'unité de régulation de pression (806).

5. Bicyclette (10) selon l'une quelconque des revendications précédentes, **caractérisée en ce que** pour au moins une des unités de roue (12v, 12h), la bague capteur (612) s'appuie sur le disque de frein (206).

6. Bicyclette (10) selon l'une quelconque des revendications précédentes, **caractérisée en ce que** pour au moins une des unités de roue (12v, 12h), la bague capteur (612) repose directement contre le disque de frein (206).

7. Bicyclette (10) selon l'une quelconque des revendications précédentes, **caractérisée en ce que** pour au moins une des unités de roue (12v, 12h), une couche intermédiaire (902) est agencée entre la bague capteur (612) et le disque de frein (206).

8. Bicyclette (10) selon l'une quelconque des revendications précédentes, **caractérisée en ce que** pour au moins une des unités de roue (12v, 12h), le disque de frein (206) comprend plusieurs branches porteuses (286) qui portent une bague de freinage (282), qu'en particulier N branches porteuses (286) sont agencées au niveau du disque de frein (206) et l'agencement des branches porteuses (286) est symétrique en rotation avec un angle 360°/N par rapport à une rotation autour d'un axe de disque de frein (262).

9. Bicyclette (10) selon l'une quelconque des revendications précédentes, **caractérisée en ce que** pour au moins une des unités de roue (12v, 12h), la bague capteur (612) s'étend sensiblement dans un plan de bague capteur (622), lequel s'étend perpendiculairement à un axe de bague capteur (618), qu'en particulier dans un état non monté, une zone intérieure (624) de la bague capteur (612) est distante du plan de bague capteur (622), lequel est défini par une zone extérieure (628) de la bague capteur (612).

10. Bicyclette (10) selon l'une quelconque des revendications précédentes, **caractérisée en ce que** pour au moins une des unités de roue (12v, 12h), la zone extérieure (628) de la bague capteur (612) est disposée de manière à être appliquée contre le disque de frein (206) sous l'effet d'une force.

11. Bicyclette (10) selon l'une quelconque des revendications précédentes, **caractérisée en ce que** pour au moins une des unités de roue (12v, 12h), la zone de balayage (616) est agencée pour reposer contre les branches porteuses (286), qu'en particulier la zone de balayage (616) s'appuie sur les branches porteuses (286) du disque de frein (206).

12. Bicyclette (10) selon l'une quelconque des revendications précédentes, **caractérisée en ce que** pour au moins une des unités de roue (12v, 12h), la zone de balayage (616) présente une structure périodiquement variable (648) le long de la direction périphérique (632) autour de l'axe de bague capteur (618), qu'en particulier la structure périodiquement variable (648) dans la zone de balayage (616) est symétrique en rotation avec un angle 360°/kN par rapport à une rotation autour de l'axe de bague capteur (618), dans laquelle kN correspond au nombre N des branches porteuses (286) du disque de frein (206) ou à un multiple entier de celui-ci.

13. Bicyclette (10) selon l'une quelconque des revendications précédentes, **caractérisée en ce que** pour au moins une des unités de roue (12v, 12h), la structure périodiquement variable (648) est réalisée de manière à influencer plus ou moins fortement le champ magnétique de façon périodiquement variable le long de la direction périphérique autour de l'axe de bague capteur (618).

14. Bicyclette (10) selon l'une quelconque des revendications précédentes, **caractérisée en ce que** pour au moins une des unités de roue (12v, 12h), la structure périodiquement variable (648) est réalisée par des passages (658) et des ponts de matériau (656) agencés de manière à s'alterner régulièrement, qu'en particulier les passages (658) s'étendent de manière oblongue dans une direction (630) radiale à l'axe de bague capteur (618), que mN passages (658) et mN ponts de matériau (656) sont agencés en particulier dans la zone de balayage (616), dans laquelle mN correspond au nombre N des branches porteuses (286) du disque de frein (206) ou à un multiple entier de celui-ci.

15. Bicyclette (10) selon l'une quelconque des revendications précédentes, **caractérisée en ce que** pour au moins une des unités de roue (12v, 12h), les passages (658) et les ponts de matériau (656) sont agencés symétriques en rotation avec un angle 360°/IN par rapport à une rotation autour de l'axe de bague capteur (618), dans laquelle IN correspond au nombre N des branches porteuses (286) du disque de frein (206) ou à un multiple entier de celui-ci, qu'en particulier les passages (658) et les ponts de matériau (656) sont agencés périodiquement entre les branches porteuses (286) du disque de frein (206) le long de la direction périphérique (116) autour de l'axe de rotation (114), qu'en particulier une largeur des passages (658) transversalement à la direction radiale à l'axe de bague de capteur (618) est inférieure à une largeur des branches porteuses (286) du disque de frein (206) transversalement à la direction radiale à l'axe de disque de frein (252), qu'en particulier chaque bord (294, 296) de chacune des branches porteuses (286) est agencé au niveau d'une zone de la zone de balayage (616) influençant fortement un champ magnétique, qu'en particulier un bord (294, 296) de chacune des branches porteuses (286) est recouvert par un des ponts de matériau (656) dans la zone de balayage (616).

16. Bicyclette (10) selon l'une quelconque des revendications précédentes, **caractérisée en ce que** pour au moins une des unités de roue (12v, 12h), les branches porteuses (286) du disque de frein (206) sont agencées périodiquement le long de la direction périphérique (632) autour de l'axe de rotation (114) par rapport à la structure périodiquement variable (648) de la zone de balayage (616), qu'en particulier chacune des branches porteuses (286) recouvre entièrement au moins un des passages (658), qu'en particulier chacun des passages (658) soit est recouvert entièrement par une branche porteuse (286) soit est exposé, qu'en particulier les passages recouverts (658a) et les passages exposés (658f) sont agencés de manière périodique le long de la direction périphérique (612) autour de l'axe de bague capteur (618).

17. Bicyclette (10) selon l'une quelconque des revendications précédentes, **caractérisée en ce que** pour au moins une des unités de roue (12v, 12h), des branches de retenue (642) retiennent la zone de balayage (616) au niveau d'une bague de montage (634), qu'en particulier la bague capteur (612) et le disque de frein (206) sont agencés au niveau du moyeu (102) de sorte que les branches porteuses (286) du disque de frein (206) et les branches de retenue (642) de la bague capteur (612) se recouvrent dans une direction axiale à l'axe de rotation (114).
